(19) Europäisches Patentamt
European Patent Office
Office européen des brevets

(11) **EP 1 762 452 A2**

(12) **EUROPEAN PATENT APPLICATION**

(43) Date of publication:
**14.03.2007 Bulletin 2007/11**

(21) Application number: **06254637.9**

(22) Date of filing: **06.09.2006**

(51) Int Cl.:
***B60W 20/00*** *(2006.01)* ***B60W 30/18*** *(2006.01)*
*B60W 10/02* *(2006.01)* *B60W 10/06* *(2006.01)*
*B60W 10/08* *(2006.01)*

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **08.09.2005 JP 2005260631**
**08.09.2005 JP 2005260888**

(71) Applicant: **NISSAN MOTOR CO., LTD.**
**Yokohama-shi,**
**Kanagawa 221-0023 (JP)**

(72) Inventors:
- **Shinichiro, Joe**
  **Yokohama-shi**
  **Kanagawa, 221-0023 (JP)**
- **Yamanaka, Tsuyoshi**
  **Yokohama-shi**
  **Kanagawa, 221-0023 (JP)**
- **Okuda, Tadashi**
  **Yokohama-shi**
  **Kanagawa, 221-0023 (JP)**
- **Adachi, Kazutaka**
  **Yokohama-shi**
  **Kanagawa, 221-0023 (JP)**
- **Ito, Ken**
  **Yokohama-shi**
  **Kanagawa, 221-0023 (JP)**
- **Hayasaki, Koichi**
  **Yokohama-shi**
  **Kanagawa, 221-0023 (JP)**

(74) Representative: **Holmes, Matthew William**
**Nissan Technical Centre Europe**
**Intellectual Property Department**
**Cranfield Technology Park**
**Bedfordshire, MK43 0DB (GB)**

(54) **Engine starting control device and method**

(57) An engine of a hybrid vehicle is lift started by reducing a rotational speed of a motor/generator of the hybrid vehicle by adjusting a gearshift ratio of a transmission coupled to the motor/generator, and engaging a clutch to couple the engine, while in a stopped state, to the rotating motor/generator for imparting the rotation to the engine.

FIG. 1
1
1a
6
5
4
3a
3
3b
2
Automatic transmission
8
2
11
12
7
13
14
Engine rotation speed Ne
Motor/ generator rotation speed Nm
Input rotation speed Ni
Output rotation speed No



Printed by Jouve, 75001 PARIS (FR)

## Description

The present invention relates to an engine starting control device and method and particularly, but not exclusively, to an engine starting control device and method for a hybrid vehicle. The invention finds advantageous application in relation to hybrid vehicles with the ability to also operate via power from a motor/generator other than the engine and which have an electric operation (EV) mode that operates on power from only the motor/generator and a hybrid operation (HEV) mode that operates on power from both the engine and the motor/generator. Aspects of the invention relate to a device for starting the engine when switching from the EV mode to the HEV mode as necessary for engine output while driving. Aspects of the invention also relate to a method and to a vehicle.
Various types of devices have been proposed conventionally as a hybrid drive device for use in a hybrid vehicle as described above. One such known device is described in Japanese Laid Open Patent Publication H11-082260.
This type of hybrid drive device provides a composition that equips a motor/generator between the engine and the transmission by connecting the engine revolution to a shaft oriented towards the transmission and has a first clutch that is connected with the ability to separate between the engine and the motor/generator in addition to having a second clutch in lieu of a torque converter that is connected with the ability to separate between the motor/generator and the transmission output shaft.
A hybrid vehicle equipped with such a hybrid drive device uses the electric operation (EV) mode to operate via only the power from the motor/generator when engaging the second clutch while releasing the first clutch, and uses the hybrid operation (HEV) mode to operate via the power from both the engine and the motor/generator when the first clutch and the second clutch are engaged.
For this type of hybrid vehicle, when engine output is required while driving in the former EV mode, and when switching from EV mode to the latter HEV mode, it is necessary to switch to the corresponding mode while starting the engine.
Conventionally when switching such modes and starting the engine, as described in Japanese Laid Open Patent Publication H11-082260, switching modes from EV mode to HEV is performed by engagement progression the first clutch, which is in a released state between the engine and the motor/generator and the engine is started by cranking it while in a stopped state due to the drag torque of the first clutch.
A technology is further proposed in (Japanese Laid Open Patent Publication H11-082260) to prevent the shock caused by the transfer of the engine torque fluctuation to the drive wheel that takes place when starting the engine and when engaging the first clutch by temporarily releasing the second clutch that is in an engaged state between the motor/ generator and the transmission and starting the engine in this state by performing progressive engagement of the aforementioned first clutch.
However, with the conventional method, by leaving the second clutch that is between the motor/generator and the transmission in a released state while progressively engaging the first clutch that is between the engine and the motor/generator and cranking the engine, a sense of discomfort is experienced by the driver from feeling the release of the output torque when the engine is being cranked because the torque output to the drive wheel becomes zero so that the torque is not transferred to the drive wheel when the second clutch separates between the power source and the drive wheel when the engine is being cranked.
It is an aim of the invention to address this problem and to improve upon such known technology. Other aims and advantages of the invention will become apparent from the following description, claims and drawings.
Aspects of the invention therefore provide a device, a method and a vehicle as claimed in the appended claims.
According to another aspect of the invention mere is provided a drive device for a hybrid vehicle, comprising an engine and a motor/generator, a first clutch disposed between the engine and the motor/generator that has an ability to change a transfer torque capacity therebetween, a second clutch disposed between the motor/generator and a drive wheel that has an ability to change a transfer torque capacity therebetween and a control device that has an ability to control the engine, the motor/generator, the first clutch and the second clutch, wherein the control device has the ability to select an electric operation mode by releasing the first clutch while engaging the second clutch, or a hybrid operation mode by engaging both the first clutch and the second clutch is equipped with a first clutch engagement control means for starting the engine by engagement progression of the first clutch when changing modes during operation from the electric operation mode to the hybrid operation mode, is equipped with a second clutch engagement control means that causes a slip engagement of the second clutch when starting the engine and is equipped with a motor/generator control means for controlling the motor/generator so that the motor/generator operates so as to maintain the slip engagement.
In an embodiment, the second clutch engagement control means is a device that causes a slip engagement of the second clutch so as to reach a transfer torque capacity equivalent to the target drive force corresponding to the vehicle drive state.
The device may comprise an automatic transmission disposed between the second clutch and the drive wheel. The device may comprise an automatic transmission disposed between the motor/generator and the second clutch.
The device may comprise an automatic transmission disposed between the motor/generator and the drive wheel, whereby one of the clutches in the automatic transmission that governs the torque transfer is used as the second clutch.

In an embodiment, the motor/generator control means controls the motor/generator torque so as to be close to the sum of the slip torque portion of the first clutch required at the start of the engine and the slip torque portion of the second clutch that is the vehicle drive force when starting the engine by the engagement progression of the first clutch while slip-engaging the second clutch.

In an embodiment, the motor/generator control means raises the torque of the motor/generator to accompany the rise in the slip torque due to the engagement progression of the first clutch.

In an embodiment, the motor/generator control means uses slip servo control of the motor/generator so that the second clutch achieves a prescribed slipped state when starting the engine by the engagement progression of the first clutch while slip-engaging the second clutch.

In an embodiment, the motor/generator control means has a disturbance observer that regards other torque that acts on the motor/generator, besides the motor/generator torque, as disturbance, estimates such disturbance, and adds a disturbance estimation value to the motor/generator torque to perform disturbance compensation.

In an embodiment, the second clutch engagement control means and the motor/generator control means begin the slip of the second clutch after reducing the transfer torque capacity of the second clutch to approximately the target second clutch transfer torque within the transfer torque range of the second clutch in which EV mode can be realized when starting the engine.

In an embodiment, the second clutch engagement control means reduces the transfer torque capacity of the second clutch to approximately the target second clutch transfer torque and then initiates the slip of the second clutch with the rise of the motor/generator torque performed by the motor/generator control means.

In an embodiment, the second clutch engagement control means reduces the transfer torque capacity of the second clutch to approximately the target second clutch transfer torque and then initiates the slip of the second clutch by further reducing the second clutch transfer torque capacity.

In an embodiment, the second clutch engagement control means increases the transfer torque capacity of the second clutch according to the increase of the engine load demand and reduces it according to the reduction of the engine load demand when engaging the slip of the second clutch.

In an embodiment, the first clutch engagement control means sets the transfer torque capacity of the first clutch to be greater than the friction of the engine at the time of starting the engine.

In an embodiment, the second clutch engagement control means sets the target second clutch transfer torque to a value within a range of values obtained by subtracting the friction portion of the engine from the maximum torque of the motor/generator during the time until the engine is started.

In an embodiment, the first clutch engagement control means sets the target first clutch transfer torque to a value within a range of values obtained by subtracting the target second clutch transfer torque from the maximum torque of the motor/generator during the time until the engine is started.

In an embodiment, the motor/generator control means reduces the motor/generator torque when the engine rotation speed overshoots the motor/generator rotation speed so that it accompanies the reversal in the rotational difference between the engine rotation speed and the motor/generator rotation speed.

In an embodiment, the motor/generator control means increases the motor/generator torque immediately after engagement of the first clutch from a state in which the engine rotation speed is higher than the motor/generator rotation speed, and reduces the motor/generator torque immediately after engagement of the first clutch from a state in which the engine rotation speed is lower than the motor/generator rotation speed.

In an embodiment, the motor/generator control means controls the motor/generator so that the change ratio of the input/output rotation speed difference of the second clutch is close to zero when the start of the engine has been completed and the second clutch is re-engaged.

In an embodiment, the second clutch engagement control means is further equipped to reduce the transfer torque capacity of the second clutch to a torque capacity that corresponds to a drive force that should be transferred when transitioning to electric operation mode and maintains the transfer torque capacity of the second clutch to this reduced torque capacity while selecting the electric operation mode.

In an embodiment, the second clutch control means further comprises a clutch slip rotation control means for controlling the slip rotation of the second clutch to a target value so that the drive force fluctuation is within an allowable range while starting the engine through the engagement progression of the first clutch occurring when changing modes from electric operation mode to hybrid operation mode.

In an embodiment, the second clutch slip rotation control means performs a control to make the slip rotation of the second clutch to be a target value within a large slip rotation area where the change ratio of the friction coefficient in relation to the slip rotation of the second clutch becomes smaller than a predetermined value.

In an embodiment, the motor/generator control means is further equipped to control the torque of the motor/generator to be a torque value expressed by the sum of the drive force that should be transferred and the transfer torque capacity of the first clutch for the time until the slip rotation of the second clutch becomes the value of the large slip rotation area.

According to yet another aspect of the invention there is provided a drive device for a hybrid vehicle, comprising an engine and a motor/generator, a first clutch disposed between the engine and the motor/generator that has an ability to change a transfer torque capacity therebetween, a second clutch disposed between the motor/generator and a drive wheel that has an ability to change a transfer torque capacity therebetween and a control device that has an ability to control the engine, the motor/generator, the first clutch and the second clutch, wherein the control device has the ability to select an electric operation mode by releasing the first clutch while engaging the second clutch, or a hybrid operation mode by engaging both the first clutch and the second clutch, is equipped with a first clutch engagement controller for starting the engine by engagement progression of the first clutch when changing modes during operation from the electric operation mode to the hybrid operation mode, is equipped with a second clutch engagement controller that causes a slip engagement of the second clutch when starting the engine and is equipped with a motor/generator controller for controlling the motor/generator so that the motor/generator operates so as to maintain a slip engagement.

In an embodiment, the second clutch engagement controller is a device that causes a slip engagement of the second clutch so as to reach a transfer torque capacity equivalent to the target drive force corresponding to the vehicle drive state.

According to a further aspect of the invention there is provided a method of switching operation modes of a drive device for a hybrid vehicle, comprising selecting an electric operation mode by releasing a first clutch disposed between an engine and a motor/generator while engaging a second clutch disposed between the motor/generator and a drive wheel, or a hybrid operation mode by engaging both the first clutch and the second clutch, starting the engine by engagement progression of the first clutch when changing modes during operation from the electric operation mode to the hybrid operation mode, causing a slip engagement of the second clutch to prevent the transfer torque fluctuation of the first clutch that accompanies the starting of the engine from being transferred to the drive wheel and controlling the motor/generator so that the motor/generator operates so as to maintain the slip engagement.

In an embodiment, causing the slip engagement comprises causing the slip engagement of the second clutch so as to reach a transfer torque capacity equivalent to the target drive force corresponding to the vehicle drive state.

The method may comprise shifting power from the second clutch toward the drive wheel with an automatic transmission between the second clutch and the drive wheel.

The method may comprise shifting power from the motor generator toward the drive wheel through the second clutch with an automatic transmission disposed between the motor/generator and the second clutch.

In an embodiment, controlling the motor generator comprises controlling the motor/generator torque so as to be close to the sum of the slip torque portion of the first clutch required at the start of the engine and the slip torque portion of the second clutch that is the vehicle drive force when starting the engine by the engagement progression of the first clutch while slip-engaging the second clutch.

In an embodiment, controlling the motor generator comprises raising the torque of the motor/generator to accompany the rise in the slip torque due to the engagement progression of the first clutch.

In an embodiment, controlling the motor generator comprises using slip servo control of the motor/generator so that the second clutch achieves a prescribed slipped state when starting the engine by the engagement progression of the first clutch while slip-engaging the second clutch.

In an embodiment, controlling the motor generator comprises estimating a disturbance due to other torque that acts on the motor/generator besides the motor/generator torque and adding the estimated disturbance value to the motor/generator torque to perform disturbance compensation.

The method may comprise beginning the slip of the second clutch after reducing the transfer torque capacity of the second clutch to approximately the target second clutch transfer torque within the transfer torque range of the second clutch in which EV mode can be realized when starting the engine.

The method may comprise reducing the transfer torque capacity of the second clutch to approximately the target second clutch transfer torque and initiating the slip of the second clutch with the rise of the motor/generator torque performed by the motor/generator control means.

The method may comprise reducing the transfer torque capacity of the second clutch to approximately the target second clutch transfer torque and initiating the slip of the second clutch by further reducing the second clutch transfer torque capacity.

The method may comprise increasing the transfer torque capacity of the second clutch according to the increase of the engine load demand and reducing the transfer torque capacity of the second clutch according to the reduction of the engine load demand when engaging the slip of the second clutch.

The method may comprise setting the transfer torque capacity of the first clutch to be greater than the friction of the engine at the time of starting the engine with the drag torque of the first clutch.

The method may comprise setting the target second clutch transfer torque to a value within a range of values obtained by subtracting the friction portion of the engine from the maximum torque of the motor/generator during the time until the engine is started.

The method may comprise setting the target first clutch transfer torque to a value within a range of values obtained by subtracting the target second clutch transfer torque from the maximum torque of the motor/generator during the time until the engine is started.

The method may comprise reducing the motor/generator torque when the engine rotation speed overshoots the motor/generator rotation speed so that it accompanies the reversal in the rotational difference between the engine rotation speed and the motor/generator rotation speed.

The method may comprise increasing the motor/generator torque immediately after engagement of the first clutch from a state in which the engine rotation speed is higher than the motor/generator rotation speed and reducing the motor/generator torque immediately after engagement of the first clutch from a state in which the engine rotation speed is lower than the motor/generator rotation speed.

The method may comprise controlling the motor/generator so that the change ratio of the input/output rotation speed difference of the second clutch is close to zero when the start of the engine has been completed and the second clutch is re-engaged.

The method may comprise reducing the transfer torque capacity of the second clutch to a torque capacity that corresponds to a drive force that should be transferred when transitioning to electric operation mode and maintaining the transfer torque capacity of the second clutch to this reduced torque capacity while selecting the electric operation mode.

The method may comprise controlling the slip rotation of the second clutch to a target value so that the drive force fluctuation is within an allowable range while starting the engine through the engagement progression of the first clutch occurring when changing modes from electric operation mode to hybrid operation mode.

The method may comprise setting the slip rotation of the second clutch to be a target value within a large slip rotation area where the change ratio of the friction coefficient in relation to the slip rotation of the second clutch becomes smaller than a predetermined value.

The method may comprise controlling the torque of the motor/generator to be a torque value expressed by the sum of the drive force that should be transferred and the transfer torque capacity of the first clutch for the time until the slip rotation of the second clutch becomes the value of the large slip rotation area.

Embodiments of the invention may prevent the generation of the feeling experienced from the released output torque when the torque output to the drive wheel becomes zero while cranking the engine while at the same time preventing the fluctuation that takes place when starting the engine from getting transferred to the drive wheel due to the progressive engagement of the first clutch that takes place if it slip engages.

In an embodiment, a hybrid vehicle is equipped with an engine and a motor/generator as the power source, and between this engine and motor/generator are disposed a first clutch that has the ability to continuously or in stages convert the transfer torque capacity and a second clutch that has the ability to continuously or in stages convert the transfer torque capacity.

Further, this hybrid vehicle has the ability to select an electric operation mode via power from only the motor/generator by releasing the first clutch while engaging the second clutch, and the ability to select a hybrid operation mode via power from both the engine and the motor/generator by engaging the first clutch together with the second clutch.

The hybrid vehicle may comprise a first clutch engagement control means, a second clutch engagement control means, and a motor/generator control means to be described hereinafter.

The first clutch engagement control means progressively engages the first clutch when switching modes to the hybrid operation mode while operating in the electric operation mode and starts the engine from the drag torque of the first clutch.

The second clutch engagement control means may cause the second clutch to slip-engage so that a transfer torque capacity equivalent to the target drive corresponding to the vehicle driving conditions is reached in order to prevent the transfer torque fluctuation of the first clutch that accompanies the starting of the engine performed by the first clutch engagement control means from transferring to the drive wheel.

Further, the motor/generator control means may control the torque of the motor/generator so that the motor/generator operates so as to maintain the slip engagement when the second clutch is slip-engaged by the second clutch engagement control means.

In other words, in one embodiment the first clutch engagement control means progressively engages the first clutch and starts the engine from the drag torque thereof; the second clutch engagement control means causes the second clutch to slip-engage so that a transfer torque capacity equivalent to the target drive corresponding to the vehicle driving conditions is reached in order to prevent the transfer torque fluctuation of the first clutch that accompanies the starting of the engine performed by the first clutch engagement control means from transferring to the drive wheel; and the motor/generator control means controls the torque of the motor/generator so that the motor/generator operates so as to maintain the slip engagement when the second clutch is slip-engaged by the second clutch engagement control means.

Accordingly, the second clutch performs the aforementioned slip-engagement while the engine is being cranked due to the aforementioned progressive engagement of the first clutch and torque equivalent to the target drive force is continually transferred, while on the other hand, the torque fluctuation that takes place when starting the engine does not get transferred to the drive wheel, the shock caused by the torque fluctuation as well as the feeling experienced from the released drive force can be avoided, and the sense of discomfort that accompanies this can also be eliminated.

Within the scope of this application, it is envisaged that the various aspects, embodiments and alternatives set out in the preceding paragraphs, in the claims and in the following description may be taken individually or in any combination thereof.

The present invention will now be described, by way of example only, with reference to the accompanying drawings in which:

FIG. 1 is a schematic plane view showing the power train of a hybrid vehicle in which the concept of the present invention can be applied;

FIG. 2 is a schematic plane view showing the power train of another hybrid vehicle in which the concept of the present invention can be applied;

FIG. 3 is a schematic plane view further showing the power train of another hybrid vehicle in which the concept of the present invention can be applied;

FIG. 4 is a block diagram showing a control system of the power train shown in FIG. 3;

FIG. 5 is a block diagram showing each of the functions of the integrated controller in the aforementioned control system;

FIG. 6 is a flowchart showing the control program that is executed by the operating point command unit in the aforementioned function block diagram;

FIG. 7 is a properties diagram of the attainable target drive force used for obtaining the attainable target drive force in the flowchart shown in FIG. 6;

FIG. 8 is a graph showing the ranges for the electric operation (EV) mode range and

the hybrid operation (HEV) mode range of a hybrid vehicle;

FIG. 9 is a graph showing the curve of the properties of the target discharge and charge capacity in relation to the state of charge of the battery of a hybrid vehicle;

FIG. 10 is a graph showing the curves of the gear-shifting of the automatic transmission mounted in a hybrid vehicle;

FIG. 11 is a graph that shows an example of the maximum allowable torque of the engine mounted in a hybrid vehicle;

FIG. 12 is a mode transition map of when a hybrid vehicle switches from the electric operation (EV) mode to the hybrid operation (HEV) mode;

FIG. 13 is an operation time chart for the control program shown in FIG. 6 for when transitioning from the electric operation (EV) mode to the hybrid operation (HEV) mode in conjunction with the pressing the accelerator;

FIG. 14 is an operation time chart for the control program shown in FIG. 6 for when transitioning from the electric operation (EV) mode to the hybrid operation (HEV) mode in conjunction with the change of speed of a vehicle and the change of the state of charge of the battery;

FIG. 15 is a flowchart showing a subroutine that relates to the mathematical operation of the target second clutch transfer torque capacity for EV mode;

FIG. 16 is a flowchart showing a subroutine that relates to the mathematical operation of the target motor/generator torque performed in the control program shown in FIG. 5;

FIG. 17 is a flowchart showing a subroutine that relates to the mathematical operation of the target motor/generator torque used for HEV mode performed in the control program shown in FIG. 16;

FIG. 18 is a flowchart showing a subroutine that relates to the mathematical operation of the target motor/generator torque that takes place when starting the engine for the control program shown in FIG. 16;

FIG. 19 is a flowchart showing a subroutine that relates to the mathematical operation of the target motor/generator torque used for the EV mode for the control program shown in FIG. 16;

FIG. 20 is an explanatory diagram showing the common procedure performed when the power train for a hybrid vehicle shown in FIG. 1 through FIG. 3 is switched from the EV mode to the HEV mode, whereby (a) is an explanatory diagram of the EV Mode; (b) is an explanatory diagram of the first stage; (c) is an explanatory diagram of the second stage; (d) is an explanatory diagram of the third stage; and (e) is an explanatory diagram of the HEV mode;

FIG. 21 is a graph showing the properties of the changes in the clutch friction coefficient in relation to the slip rotation of the second clutch; and

FIG. 22 is an operation time chart for the control program shown in FIG. 15 through FIG. 19.

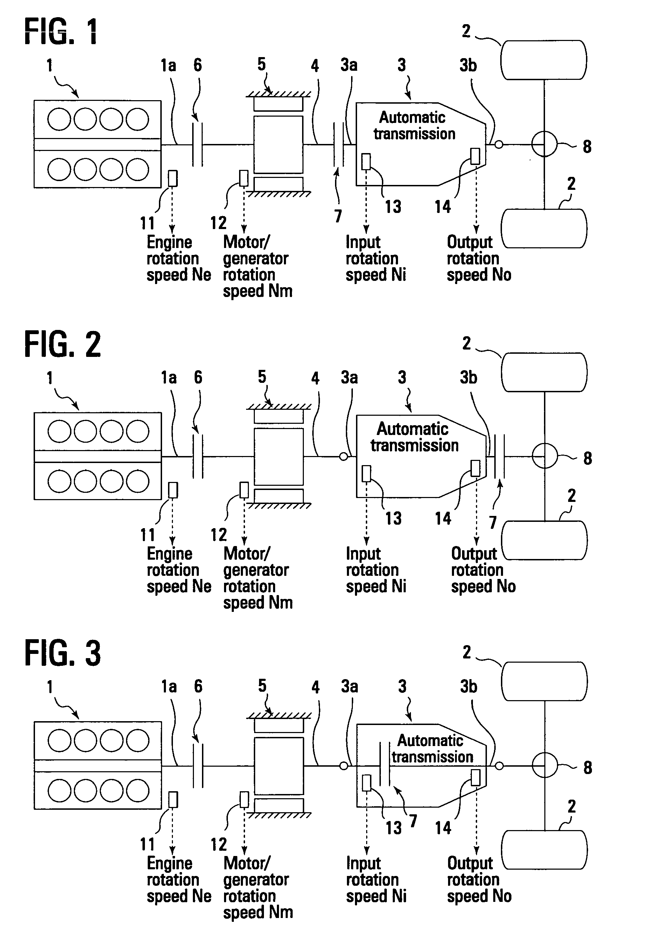

FIG. 1 shows a power train of a front engine/rear wheel drive automobile (rear wheel drive hybrid vehicle) equipped with a hybrid drive device which can be applied to the engine starting control device of the present invention; and reference symbol 1 is an engine, and 2 is a drive wheel (rear wheel).

In the power train of the hybrid vehicle shown in FIG. 1, an automatic transmission 3 is placed in tandem at the rear of engine 1 in the front to rear direction of a vehicle in the same manner as a common rear wheel drive vehicle, and a motor/generator 5 is provided by connecting with a shaft 4 which transfers the rotation from the engine 1 (crankshaft 1a) to the input shaft 3a of the automatic transmission 3.

The motor/generator 5 acts as a motor or generator (electric power generator), and is placed between the engine 1 and the automatic transmission 3.

A first clutch 6 is placed between the motor/generator 5 and the engine 1, and more specifically is inserted between the shaft 4 and the engine crankshaft 1a, and the engine 1 and the motor/generator 5 are detachably connected by means of the first clutch 6.

Here, the first clutch 6 has the ability to change the transfer torque capacity continuously or in stages, and is composed of, for example, a wet multi-plate clutch that has the ability to change the transfer torque capacity by controlling the clutch hydraulic fluid flow and the clutch hydraulic pressure continuously or in stages by means of a proportional solenoid.

A second clutch 7 is inserted between the motor/generator 5 and the automatic transmission 3, and more specifically, between the shaft 4 and the transmission input shaft 3a, and the motor/generator 5 and the automatic transmission 3 are detachably connected by means of the second clutch 7.

The second clutch 7, similar to the first clutch 6, has the ability to change the transfer torque capacity continuously or in stages, and is composed of, for example, a wet multi-plate clutch that has the ability to change the transfer torque capacity by controlling the clutch hydraulic fluid flow and the clutch hydraulic pressure continuously or in stages by means of a proportional solenoid.

The automatic transmission 3 is the same as that described in pages C-9 through C-22 of the "New Skyline Model (CV35)" issued by Nissan Motor Co., Ltd., January 2003, and the power train (gear position) is determined by a combination of the engaging and releasing of a plurality of friction elements (clutch, brake, or the like), which is performed selectively by engaging and releasing these friction elements.

Accordingly, the automatic transmission 3 shifts the rotation from the input shaft 3a according to the gear ratio that corresponds to the selected gear position and outputs it to the output shaft 3b.

This output rotation is transmitted by being distributed to the left and right rear wheels 2 by a differential 8, and contributes to operating the vehicle.

However, it goes without saying that the automatic transmission 3 is not limited to a stage-type transmission as described above, but can also be applied to a continuous variable transmission.

In the aforementioned power train shown in FIG. 1, when electric operation (EV) mode, which is used when in low load/low vehicle speed and includes starting a car from a stopped state, is required, first clutch 6 is released and second clutch 7 is engaged to put automatic transmission 3 into a power transfer state.

When the motor/generator 5 is driven in such a state, only the output rotation from the motor/generator 5 is transferred to the transmission input shaft 3a, and the automatic transmission 3 shifts the rotation to the input shaft 3a according to the gear position selected therein, and outputs from the transmission output shaft 3b. Subsequently, the rotation from the transmission output shaft 3b is transferred to the rear wheel 2 through the differential 8, and the vehicle can be operated in electric operation (EV operation) by only the motor/generator 5.

When hybrid operation (HEV operation) mode, which is used when operating at a high speed operation or heavy load is required, both the first clutch 6 and the second clutch 7 are engaged and the automatic transmission 3 is put into a power transfer state.

In such a state, both the output rotation from the engine 1 and the output rotation from the motor/generator 5 are transferred to the transmission input shaft 3a, and the automatic transmission 3 shifts the rotation to the input shaft 3a according to the gear position selected therein, and outputs from the transmission output shaft 3b.

Subsequently, the rotation from the transmission output shaft 3b is transferred to the rear wheel 2 by passing through the differential 8, and the vehicle can be operated in hybrid operation (HEV operation) by both the engine 1 and the motor/generator 5.

In such HEV operation, when the engine 1 is driven with optimum fuel consumption and energy surplus, the surplus energy is converted to electrical power by operating the motor/generator 5 as a generator using the surplus energy, and the generated power is stored in a battery 9 to be used to drive the motor of the motor/generator 5, thereby improving fuel consumption of the engine 1.

Additionally in FIG. 1, the first clutch 7 that detachably connects the motor/generator 5 and the drive wheel 2, is disposed between the motor/generator 5 and the automatic transmission 3; however, as shown FIG. 2, a similar function can be achieved by disposing the second clutch 7 between the automatic transmission 3 and the differential 8.

Furthermore, in FIG. 1 and FIG. 2, an exclusive second clutch 7 is added in front or behind the automatic transmission 3; however, alternatively, a friction element for forward gear position selection or a friction element for backward gear position selection which already exists in the automatic transmission 3 may also be used as the second clutch 7, as shown in FIG. 3.

In this case, a significant cost advantage is possible as the exclusive second clutch becomes unnecessary since in addition to the second clutch 7 performing the above mode selection function, the automatic transmission is shifted to the power transfer state when the clutch is engaged so as to perform this function.

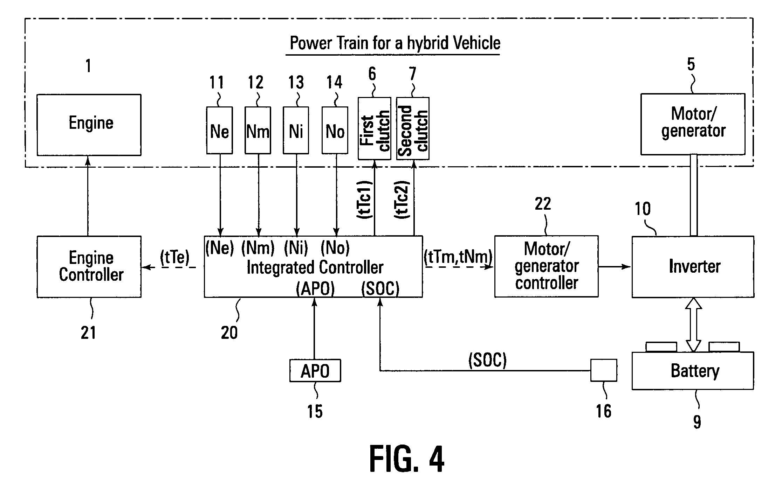

The engine 1, motor/generator 5, first clutch 6, and second clutch 7 which constitute the power train of the hybrid vehicle shown in FIG. 1 through FIG. 3, are controlled by the system, as shown in FIG. 4

In addition, an explanation is given hereinafter of the power train that shown in FIG. 1.

The control system shown in FIG. 4 is equipped with an integrated controller 20 which integrates and controls the operating point of the power train, and the operating point of the power train is regulated by the target engine torque tTe, the target motor/generator torque tTm (it may also be the target motor/generator rotation speed tNm), the first clutch 6 target transfer torque capacity tTc1, and the second clutch 7 target transfer torque capacity tTc2.

A signal from the engine rotation sensor 11 that detects the engine rotation speed Ne, a signal from the motor/generator rotation sensor 12 that detects the motor/generator rotation speed Nm, a signal from the input rotation sensor 13 that detects the transmission input rotation speed Ni, a signal from the output rotation sensor 14 that detects the transmission output rotation speed No, a signal from the accelerator opening sensor 15 that detects the amount of accelerator depression (accelerator opening APO), which indicates the required load state of the engine 1, and a signal from the charged state sensor 16 that detects the state of the charge SOC (transferable power) in the battery 9, which stores the electric power for the motor/generator 5, are input into the integrated controller 20 in order to determine the operating point of the aforementioned power train.

In addition, the engine rotation sensor 11, the motor/generator rotation sensor 12, the input rotation sensor 13, and the output rotation sensor 14 of the aforementioned sensors can be arranged as shown in FIG. 1 through FIG. 3.

The integrated controller 20 selects a feasible driving mode (EV mode or HEV mode) for the drive force of the vehicle that is desired by the driver from the aforementioned input information, or the accelerator pedal opening (APO), the state of charge of the battery and the transmission output rotation speed No (vehicle speed VSP), and also calculates the target engine torque tTe, the target motor/generator torque tTm (or the target motor/generator rotation speed tNm), the target first clutch transfer torque capacity tTc1, and the target second clutch transfer torque capacity tTc2, respectively.

The target engine torque tTe is supplied to the engine controller 21, and the target motor/generator torque tTm (or the target motor/generator rotation speed tNm) is supplied to the motor/generator controller 22.

The engine controller 21 controls the engine 1 so that the engine torque Te becomes the target engine torque tTe, and the motor/generator controller 22 controls the motor/generator 5 by means of the battery 9 and the inverter 10 so that the torque Tm (or rotation speed Nm) of the motor/generator 5 becomes the target motor/generator torque tTm (or target motor/generator rotation speed tNm).

The integrated controller 20 supplies the electric current that corresponds to the target first clutch transfer torque capacity tTc1 and the target second clutch transfer torque capacity tTc2 into the engaging control solenoid (not illustrated) of the first clutch 6 and the second clutch 7, and also controls the engaging force for each of the first clutch 6 and second clutch 7, respectively, so that the transfer torque capacity Tc1 of the first clutch 6 coincides with the target transfer torque capacity tTc1 and the transfer torque capacity Tc2 of the second clutch 7 coincides with the target second clutch transfer torque capacity tTc2.

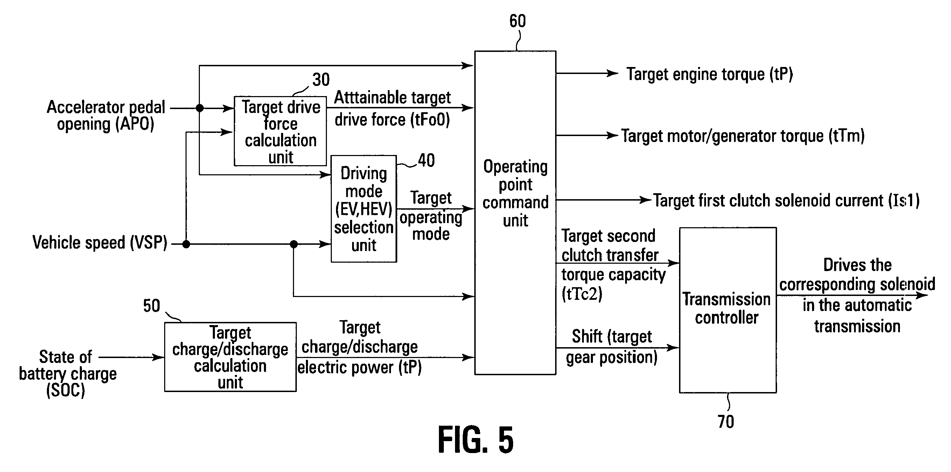

The integrated controller 20 executes the selection of the aforementioned driving modes (EV mode or HEV mode) as well as the calculation of the target engine torque tTe, the target motor/generator torque tTm (or the target motor/generator rotation speed tNm), the target first clutch transfer torque capacity tTc1, and the target second clutch transfer torque capacity tTc2, as shown in the function block diagram for FIG. 5.

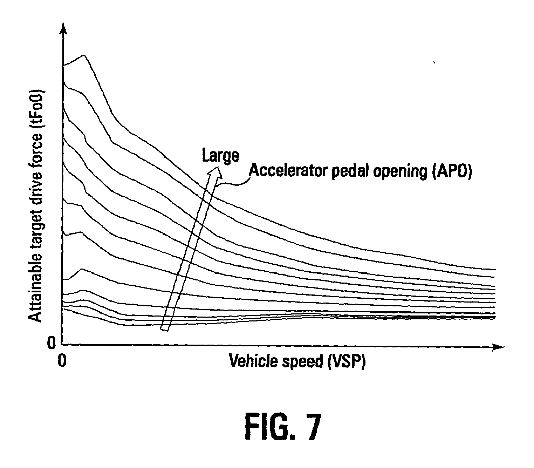

At target drive force calculation unit 30, a steady attainable target drive force tFo0 is calculated from the accelerator pedal opening APO and the speed of the vehicle VSP by using the attainable target drive force map shown in FIG. 7.

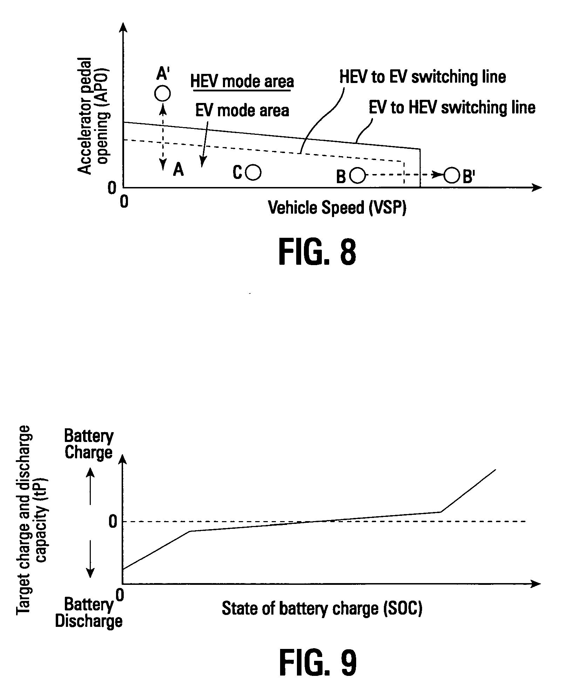

At driving mode selection unit 40, the targeted driving mode is determined from the accelerator pedal opening APO and the speed of the vehicle VSP by using the EV-HEV range map shown in FIG. 8.

As is clear from the EV-HEV range map shown in FIG. 8, the HEV mode is selected when in high load or at a high vehicle speed, and the EV mode is selected when in low load or at a low vehicle speed, and when the operating point, which is determined by a combination of the accelerator pedal opening APO and the speed of the vehicle VSP while operating in EV mode, exceeds the switching line from EV to HEV and enters into the HEV range, the mode switches from the EV mode to HEV mode, and also when the operating point exceeds the switching line from HEV to EV while operating in HEV mode and enters into the EV range, the mode switches from HEV mode to EV mode.

In the target charge and discharge calculation unit 50 of FIG. 5, a target charge and discharge capacity (electric power) tP is calculated from the state of the battery charge SOC by using the charge and discharge capacity map shown in FIG. 9.

In the operating point command unit 60, a momentarily transitional target engine torque tTe, target motor/generator torque tTm, target solenoid current Is1 of the first clutch 6, target transfer torque capacity tTc2 of the second clutch 7, and the target gear position SHIFT are calculated from the accelerator pedal opening APO, the attainable target drive force tFo0, the target driving mode, the speed of the vehicle VSP, and the target charge and discharge battery power tP in order to set these as the attainable targets for the operating point.

In a transmission controller 70, the target second clutch transfer torque capacity tTc2 and the target gear position SHIFT are input, and the corresponding solenoid valve in automatic transmission 3 is driven so as to achieve the target second clutch transfer torque capacity tTc2 and the target gear position SHIFT.

In this manner, automatic transmission 3 of FIG. 3 engages and controls the second clutch 7 so that the target second clutch transfer torque capacity tTc2 can be achieved while the target gear position SHIFT becomes the selected power transfer state.

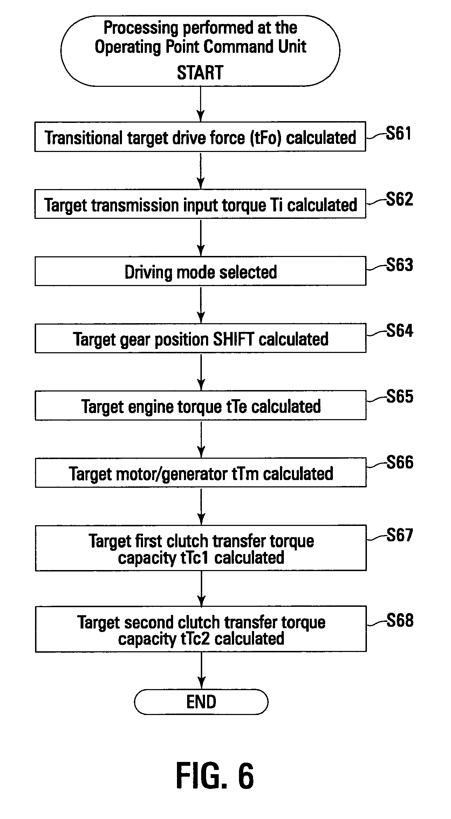

The aforementioned operating point command unit 60 executes the control program shown in FIG. 6, and calculates the transitional target engine torque tTe, the target motor/generator torque tTm, the first clutch target solenoid current Isl, the target second clutch transfer torque capacity tTc2, and the target gear position SHIFT.

In Step S61, the transitional target drive force tFo, which is necessary for transferring from the present drive force to the attainable target drive force tFo0 with a unique prescribed response, is calculated.

For this calculation, the output obtained by having the attainable target drive force tTo0 pass through the low-pass filter of a prescribed time constant, for instance, can be the transitional target drive force tFo.

In the following Step S62, the target input torque tTi of the automatic transmission 3 that is necessary to obtain the transitional target drive force tFo is obtained by the calculation of the following equation.

$$(1) \qquad tTi = tFo \times Rt/if/iG$$

Here, 'Rt' is the effective radius of the tire of the drive wheel 2, 'if' is the final gear ratio and 'iG' is the gear ratio of the automatic transmission 3 determined by the current selected gear position.

In Step S63, the driving mode is selected in accordance with the target driving mode determined by the driving mode selector 40 of FIG. 5.

Routinely, when the target driving mode is EV mode, EV mode is selected, and when the target driving mode is HEV mode, HEV mode is selected.

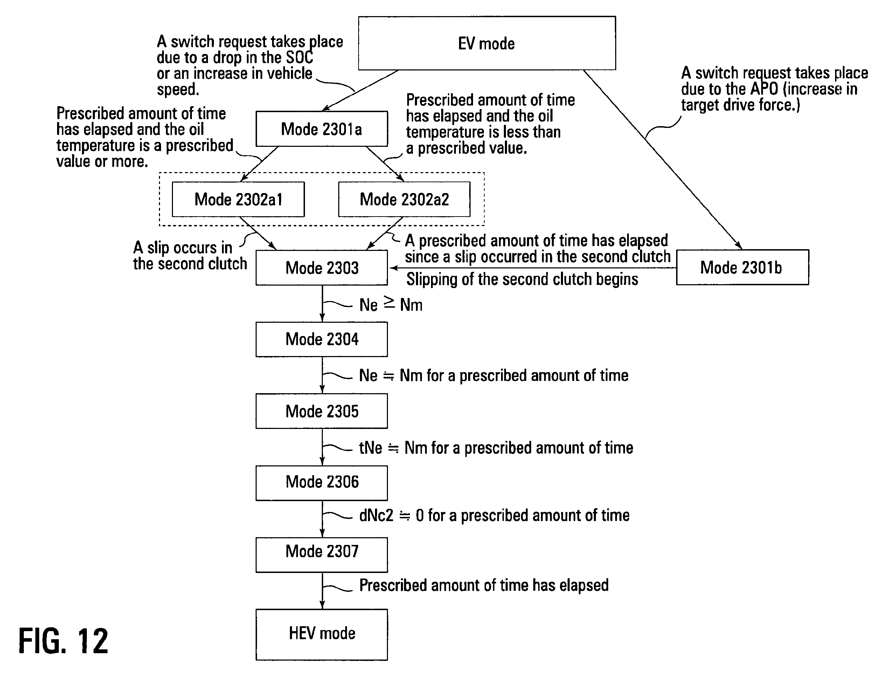

The mode is switched from the HEV mode to EV mode when the target driving mode becomes the EV mode while driving in the HEV mode, and when the target driving mode becomes the HEV mode while driving in the EV mode, the mode is switched from the EV mode to the HEV mode involving the start of the engine 1 that relates to the present invention by switching the mode as described hereinafter according to the mode transition diagram shown in FIG. 12.

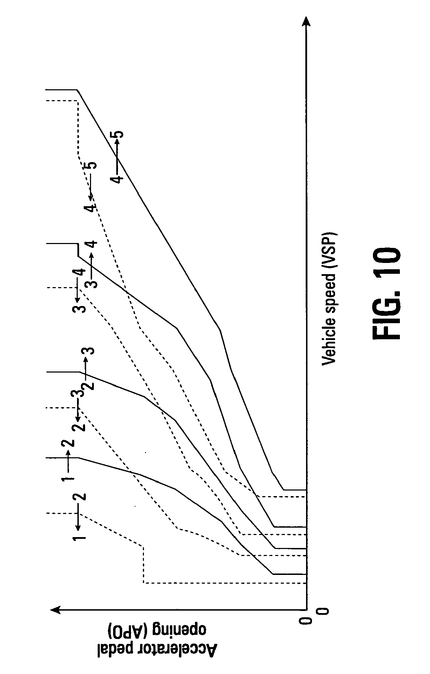

In Step S64, the target gear position SHIFT is determined from the accelerator pedal opening APO and the speed of the vehicle VSP using a predetermined transmission map which is provided as an example in FIG. 10, and this is transmitted to the transmission controller 70 of FIG. 5 and the automatic transmission 3 is shifted to the target gear position SHIFT.

In addition, the solid lines in FIG. 10 are up-shift lines between adjacent gear positions in and the broken lines are down-shift lines between adjacent gear positions.

However, even when a corresponding gear change is required as a result of crossing an up-shift line or down-shift line, and this takes place while switching from EV mode to HEV mode, the gear change requirement is not executed until the mode switch has been completed and the corresponding gear is changed after the mode is switched.

In Step 565, the target engine torque tTe is obtained as follows. For HEV mode, first, the following equation is used to calculate the ideal engine torque tTeO from the target input torque tTi obtained in Step S62, input rotation speed Ni of the automatic transmission 3, engine rotation speed Ne, and the target charge and discharge power tP.

$$(2) \qquad tTeO = (tTi \times Ni - tP)/Ne$$

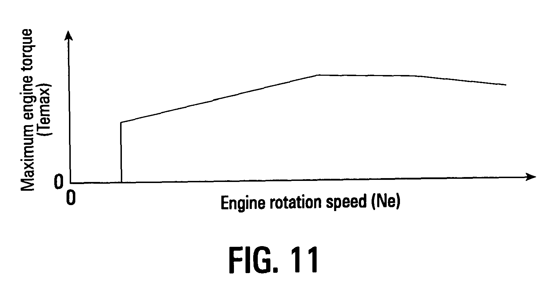

Then, the maximum engine torque Temax corresponding to the engine rotation speed Ne is obtained based on the maximum engine torque map which is provided as an example in FIG. 11, and the ideal engine torque tTeO obtained according to the aforementioned equation is controlled so as not to exceed the maximum engine torque Temax and set as the target engine torque tTe.

Further, when in EV mode, the target engine torque tTe is zero since engine torque is unnecessary.

In addition, while the driving modes are being switched, the target engine torque tTe is determined in accordance with the operation performed while switching modes, which is described in detail hereinafter.

The target engine torque tTe determined in the above manner, is transmitted to the engine controller 21 of FIG. 4, and the engine controller 21 controls the engine 1 so as to realize the target engine torque tTe.

In Step S66 that corresponds to the motor/generator control means in the present invention, the target motor/generator torque tTm is calculated by using the following equation for either EV mode or HEV mode.

$$(3) \qquad tTm = tTi - tTe$$

When the mode is being switched, the target motor/generator torque tTm is determined in accordance with the operation performed while switching modes, which is described hereinafter.

The target motor/generator torque tTm determined in the above manner is transmitted to the motor/generator controller 22 of FIG. 4, and the motor/generator controller 22 controls the motor/generator 5 via an inverter 10 so as to realize the target motor/generator torque tTm.

In Step S67 that corresponds to the first clutch engaging control means in the present invention, the target transfer torque capacity tTc1 of the first clutch 6 is determined as described below.

When in EV mode, the target transfer torque capacity tTc1 is set to zero in order to release the first clutch 6; and when in HEV mode, the target first clutch transfer torque capacity tTc1 is set to the maximum value in order to engage the first clutch 6.

Then, when in the process of switching modes, the target first clutch transfer torque capacity tTc1 is determined in accordance with the operation performed while switching modes, which is described hereinafter.

The target first clutch transfer torque capacity tTc1 determined in the aforementioned manner is converted to the target first clutch solenoid current Isl as shown in FIG. 5 and is used for engaging and controlling the first clutch 6 as shown in FIG. 4, in order engage and control the first clutch 6 so as to realize the target first clutch transfer torque capacity tTc1.

In Step S68 that corresponds to the second clutch engaging control means in the present invention, the target transfer torque capacity tTc2 of the second clutch 7 is determined as described below.

When in EV mode, the target second clutch transfer torque capacity tTc2 is set to be the maximum drive force equivalent value evTmax (the second clutch maximum transfer torque capacity for when in EV mode), and when in HEV mode, the target second clutch transfer torque capacity tTc2 is set to be the maximum value.

When the modes are in the process of being switched, the target second clutch transfer torque capacity tTc2 is determined in accordance with the operation performed while switching modes, which is described hereinafter.

The target second clutch transfer torque capacity tTc2 determined in the aforementioned manner is used for engaging and controlling the second clutch 7 via the transmission controller 70 of FIG. 5, and engages and controls the second clutch 7 so as to realize the target second clutch transfer torque capacity tTc2.

In other words, the target second clutch transfer torque capacity tTc2 is transmitted to the transmission controller 70 of FIG. 5 and contributes to the transmission control of automatic transmission 3 in order to shift to the target gear position SHIFT.

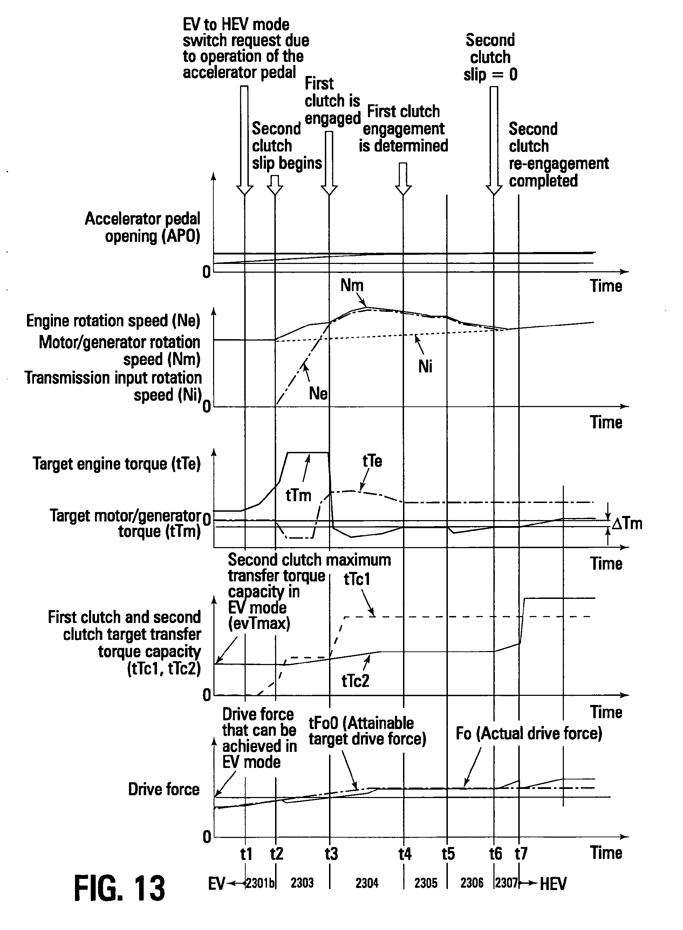

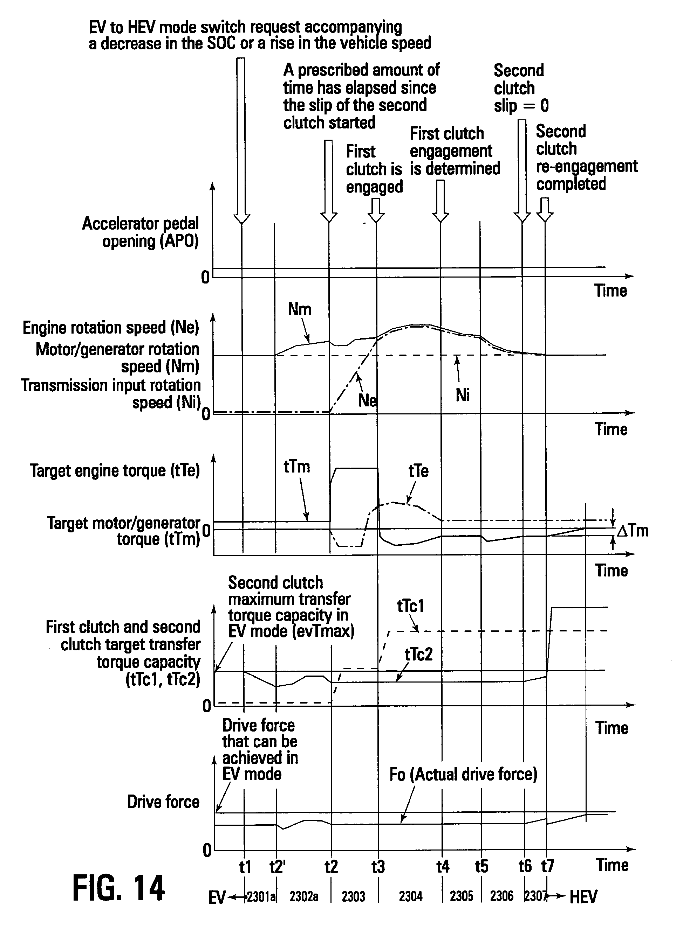

Here, the switching control from the EV mode to HEV mode that accompanies the starting of the engine that relates to the present invention is described in detail hereinafter based on the mode transition diagram shown in FIG. 12 and the time charts shown in FIG. 13 and FIG. 14.

As a result of increasing the accelerator pedal opening APO, as shown FIG. 13, while operating in EV mode (increasing the target drive force), the target mode becomes the HEV mode by changing the operating point, for instance, from point A to point A' shown in FIG. 8, and when a mode switch occurs from EV mode to HEV mode, the mode switch starts from the EV mode and first transitions to mode 2301b as shown in FIG. 12 and FIG. 13, and then arrives at HEV mode going through modes 2303 through 2307. An explanation is given hereinafter regarding mode 2301b and modes 2303 through 2307.

When operating in EV mode, as a result of increasing the vehicle speed VSP even when the accelerator pedal opening APO is fixed, as shown in FIG. 14, the target mode becomes the HEV mode by changing the operating point, for instance, from point B to point B' shown in FIG. 8, and a mode switch occurs from EV mode to HEV mode, or as a result of the state of the battery charge decreasing even when the operating point is fixed at point C shown in FIG. 8, and a mode switch occurs from EV mode to HEV mode because the target mode becomes the HEV mode and the mode switch starts from the EV mode and first transitions to mode 2301a, as shown in FIG. 12 and FIG. 14, and then arrives at HEV mode going through mode 2302a (mode 2302al or 2302a2), and modes 2303 through 2307.

A detailed description is given hereinafter regarding modes 2301a and 2302a (mode 2302al or 2302a2).

First, the mode switch from EV mode to HEV mode going through mode 2301b that involves the increase in the accelerator pedal opening (increase of the target drive force), as described above, is explained with reference to FIG. 12 and FIG. 13.

Because this mode switch is a switch request (engine start request) from the EV mode to the HEV mode performed by pressing on the accelerator pedal, a quick increase in the drive force is desired by a switching modes with a fast response (engine start) more so than by a smooth mode switch (engine start).

Furthermore, the driver does not feel much of a shock due to the mode switch (engine start) because it occurs while changing the drive force in accordance with the pressing of the accelerator pedal.

Therefore, the mode switch control that goes through mode 2301b is performed as follows.

The mode switch begins by transitioning to mode 2301b at the switch request instant t1 at which the EV mode is switched to the HEV mode by pressing the accelerator pedal; and at mode 2301b, a drive force in a range where the second clutch 7 can be completely transmitted is generated in EV mode, and when a drive force that exceeds the range where the second clutch 7 can be completely transmitted, the control mode described below is initiated to control the second clutch 7 to slip as quickly as possible.

Engagement Control of the First Clutch 6

Because of the demand to start the engine 1 quickly, as described above, cranking of the engine 1 (engine rotation speed $Ne \geqq 0$) starts by the drag torque of the first clutch 6 before the second clutch 7 begins to slip by increasing the target first clutch transfer torque capacity tTc1, as shown in FIG. 13.

However, when the drag torque of the first clutch 6 is too large, the drive force decreases and a sense of deceleration is generated; so, in order to prevent this problem, the target first clutch transfer torque capacity tTc1 is set to be within the range according to the following equation.

$$(4) \quad tTc1 < Tmmax - tTi$$

Here, Tmmax is the maximum torque of motor/generator 5.

Engagement Control of the Second Clutch 7

In mode 2301b as stated above, in order to generate a drive force in the range where the second clutch 7 can be completely transmitted in EV mode so as to make the second clutch 7 begin to slip as quickly as possible when exceeding the drive force range where the second clutch 7 can be completely transmitted, the target second clutch transfer torque capacity tTc2 at mode 2301b is maintained at the maximum drive force equivalent value evTmax for EV mode, as shown in FIG. 13.

Control of the Engine 1

The target engine torque tTe in mode 2301b is set to be zero, as shown in FIG. 13, because mode 2301b takes place prior to starting the engine.

Control of the Motor/Generator 5

In order to suppress a decrease in the drive force due to the drag torque of the first clutch 6 in mode 2301b, the torque value expressed in the following equation is applied, as shown FIG. 13, as the target motor/generator torque Tm and is obtained by adding a drag torque compensation tTc1 for the first clutch 6 to the target transmission input torque tTi for realizing the transitional target drive force tFo

$$(5) \qquad tTm = tTi + tTc1$$

Transition Conditions for Transitioning to the Next Mode 2303

During the aforementioned control, when the torque that is input from the motor/generator 5 to the second clutch 7 exceeds the second clutch maximum transfer torque capacity evTmax when in EV mode maintained at the maximum drive force equivalent value for EV mode due to the rise in the target motor/generator torque tTm that corresponds to rise in the target transmission input torque tTi that accompanies the increase in the accelerator pedal opening APO, the second clutch 7 begins to slip.

As such, at the instant t2 of FIG. 13 when the second clutch 7 begins to slip, there is a transition from the mode 2301b to the following mode 2303.

The torque transferred by second clutch 7 just as said clutch begins to slip is switched continuously or in stages from the torque generated by motor/generator 5 to the transfer torque capacity portion Tc2 of second clutch 7, thereby eliminating the step in the drive force and preserving the continuity thereof.

Furthermore, in order to cause the second clutch 7 to slip while ensuring the drag torque of the first clutch 6, the transfer torque capacity Tc2 of the second clutch 7 must be lowered to the range of the drive force that can be put out by the EV mode; however, in order to maintain the second clutch transfer torque capacity Tc2 from EV mode, in advance, to the maximum drive force equivalent value that can be put out in EV mode, the time required to lower the engagement operation hydraulic pressure of the second clutch 7 to the range of the drive force that can be put out in EV mode can be omitted, thereby improving the response from the rise in the drive force due to the starting of the engine.

Mode 2303 that takes place after the transition (instant t2) has the control mode as described below in order to start the engine by means of the drag torque of the first clutch 6 while allowing the second clutch 7 to slip for the purpose of reducing the drive force fluctuation shock that occurs at the time of engaging the first clutch 6.

Engagement Control of the Second Clutch

When the second clutch 7 slips, no matter how much torque fluctuation is generated at the input side of the second clutch 7, the output torque of the second clutch becomes the second clutch transfer torque capacity.

At this point, in mode 2303, the target second clutch transfer torque capacity tTc2 is determined by the following equation:

$$(6) \qquad tTc2 = tTi$$

This target second clutch transfer torque capacity tTc2 is raised to match the rise in the transitional target drive force tFo0 (target transmission input torque tTi), as shown in FIG. 13.

Engagement control of the first clutch 6

The target transfer torque capacity tTc1 of the first clutch 6 at mode 2303 becomes a value within the range expressed in the following equation in order to maintain the rise in the drive force and a stable slip of the second clutch 7 [when experiencing a rise in the drive force].

$$(7)\qquad Tc1min < tTc1 < Tmmax - tTc2 = Tmmax - tTi$$

Here, Tc1min is the engine friction value if it is prior to engine ignition, and it is zero if it is after engine ignition.

Control of the Engine 1

In mode 2303, a control that starts the engine 1 is performed from the engine being cranked.

Control of the Motor/Generator 5

For the motor/generator control that takes place in mode 2303, for instance, the target motor/generator rotation speed tNm for achieving the target slip amount dNc2 of the second clutch 7 is obtained according to the following equation:

$$(8)\qquad tNm = Ni + dNc2$$

The rotation speed for the motor/generator 5 is controlled by using the PI controller (P is the comparative control, and I is the integration control) so that the motor/generator rotation speed Nm matches this target value tNm.

According to such PI control, the motor/generator torque tTm changes to coincide with the clutch torque fluctuation occurring at the time of engagement of the first clutch 6 as shown in FIG. 13, and stable rotation speed control of the motor/generator can be achieved.

However by using only the PI controller, since the motor/generator torque tTm changes in order to suppress the revolution fluctuation after it occurs due to the drag torque load of the first clutch 6, the amount of temporary reduction of the motor/generator rotation speed becomes greater due to the compensation in the revolution fluctuation (torque fluctuation) of the first clutch 6 by the motor/generator torque tTm, so there is no need to ensure a greater slip amount for the second clutch 7.

Therefore, a component for compensating the torque fluctuation of the first clutch torque 6 that conforms with the target first clutch transfer torque capacity tTc1 can be added to the target motor/generator torque tTm by means of feed forward control.

When feed forward compensation is added in such a manner, the torque fluctuation of the first clutch 6 can be compensated quickly by the motor/generator, and as a result, the increase in the temporary level of reduction in the motor/generator rotation speed can be suppressed, the amount of slip of the second clutch can be reduced and the heat that is generated can also be suppressed.

In addition, in order to achieve the same objective, a disturbance observer that is based on the rotational inertia system of the motor/generator may be used instead of adding the aforementioned feed forward control, and a disturbance estimation may be performed by regarding other torque besides the motor/generator torque that act on motor/generator 5 as a disturbance and correcting the motor/generator torque with this disturbance estimation value in order to compensate for the disturbance.

Another method to maintain the slip of the second clutch 7 without using rotation speed control, is to perform open control of the motor/generator 5 so that the target motor/generator torque tTm is greater than the value of adding the drag torque compensation portion tTc1 of the first clutch to the drive force portion (the transfer torque capacity tTc2 of the second clutch 7), as shown in the following equation.

$$(9)\qquad tTm > tTc2 + tTc1$$

Transition Conditions for Transitioning to the Next Mode 2304

During the aforementioned control process, a transition from mode 2303 to mode 2304 takes place at the instant t3, shown in FIG. 13, in which the engine rotation speed Ne is the motor generator rotation speed Nm or greater in order to suppress an overshoot.

According to the aforementioned control process, the second clutch 7 maintains a stable slipped state even when engagement of the first clutch 6 is completed, so even when the engagement of the first clutch 6 is completed, or when the transfer torque of the first clutch 6 changes suddenly due to a reversal in the difference in the rotation at the front and rear of the clutch, the transfer torque fluctuation of the first clutch associated with this can be prevented from being transferred to the automatic transmission 3, the engine can be started without feeling a shock, and the heat generated by second clutch 7 can be suppressed.

The control mode as described below is performed for mode 2304 in order to suppress the overshoot of the engine rotation speed Ne.

Engagement Control of the Second Clutch 7

Because the second clutch 7 still slips in mode 2304, the transmission input torque Ti is the same as the second clutch transfer torque capacity tTc2.

Therefore, the target second clutch transfer torque capacity tTc2 in mode 2304 is determined according to equation (6) given above and is set to coincide with the transitional target drive force tFo, as shown in FIG. 13.

Engagement Control of the First Clutch 6

Since the engagement of the first clutch 6 is completed in mode 2304 as described above, the target first clutch transfer torque capacity tTc1 in said mode is set to be the maximum transfer torque capacity, as shown in FIG. 13.

Control of the Engine 1

In mode 2304, since the engagement of the first clutch is completed and the engine has been started, the target engine torque in HEV mode is set as the target engine torque tTe.

The Control of Motor/Generator 5

For motor/generator control when in mode 2304, the target motor/generator rotation speed tNm is obtained using equation (8) in order to achieve the target second clutch slip amount dNc2, as was the case in aforementioned mode 2303, and the rotation speed of the motor/generator 5 is controlled so that the motor/generator rotation speed Nm matches the target value tNm.

Or, the motor/generator 5 may also be open-controlled so that the target motor/generator torque tTm is greater than the value of adding the drag torque compensation portion tTc1 of the first clutch 6 to the drive force portion (the transfer torque capacity tTc2 of the second clutch 7), as shown in the aforementioned equation (8).

Transition Conditions for Transitioning to the Next Mode 2305

Mode 2304 transitions to mode 2305 based on the judgment that first clutch 6 has been completely engaged at instant t4 of FIG. 13 in which it is determined that the engine rotation speed Ne and the motor/generator rotation speed Nm are nearly the same throughout the prescribed time after the instant t3 of FIG. 13 when the engine rotation speed Ne becomes the motor/generator rotation speed Nm or more.

According to the aforementioned control process, the second clutch 7 maintains a stable slipped state even when engagement of the first clutch 6 is completed, so even when the engagement of the first clutch 6 is completed, or when the transfer torque of the first clutch 6 changes suddenly due to a reversal in the difference between the rotation at the front and rear of the clutch, the transfer torque fluctuation of the first clutch associated with this can be prevented from being transferred to the drive wheel 2, the engine can be started without feeling a shock, and the heat generated by second clutch 7 can be suppressed.

In order to suppress the shock at the time of re-engagement of the second clutch 7, the control mode as described hereinafter is performed for mode 2305 whereby the torque that is input from the engine 1 and motor/generator 5 to the second clutch 7 is set to coincide with the transfer torque capacity of the second clutch 7.

Engagement Control of the Second Clutch 7

Because the second clutch 7 still slips in mode 2305, the transmission input torque Ti is the same as the second clutch transfer torque capacity tTc2.

Therefore, the target second clutch transfer torque capacity tTc2 in mode 2305 is determined according equation (6) given above and is set to coincide with the transitional target drive force tFo, as shown in FIG. 13.

Engagement Control of the First Clutch 6

Since the engagement of the first clutch 6 is completed in mode 2305 as described above, the target first clutch transfer torque capacity tTc1 in said mode is set to be the maximum transfer torque capacity, as shown in FIG. 13.

Control of the Engine 1

In mode 2305, since the engagement of the first clutch 6 is completed and the engine has been started, the target engine torque in HEV mode is set as the target engine torque tTe.

The Control of Motor/Generator 5

For motor/generator control when in mode 2305, the target motor/generator rotation speed tNm is obtained using equation (8) in order to achieve a stable target slip amount dNc2 for second clutch 7 so as to prepare for the smooth engagement of second clutch 7 in the subsequent modes 2306 and 2307, the rotation speed of the motor/generator 5 is controlled so that the motor/generator rotation speed Nm matches the target value tNm.

Transition Conditions for Transitioning to the Next mode 2306

Mode 2305 transitions to mode 2306 after it is determined at instant t4 shown in FIG. 13 that the engine rotation speed Ne and the motor/generator rotation speed Nm are nearly the same throughout the prescribed time (it is determined that the engagement of the first clutch 6 has been completed), then at instant t5 shown in FIG. 13 in which it is determined that the motor/generator rotation speed Nm is near the target motor/generator rotation speed tNm throughout the prescribed time, it is judged that the overshoot of the engine rotation and the torque fluctuation has been suppressed and a stable slipped state in which second clutch 7 has reached a constant speed has been achieved and the torque input from the engine and the motor/generator 5 to the second clutch 7 are nearly the same.

Here, the initial objective is not to set the slip of the second clutch 7 to be zero, but instead, to achieve a prescribed amount of slip in order to suppress the generation of drive force fluctuation due to the reversing of the slip direction of the second clutch 7 caused by the under shooting of the motor/generator rotation speed.

The control mode as described below is performed for mode 2306 in order to suppress the generation of drive force fluctuation due to the reversing of the slip direction of the second clutch 7 caused by the under shooting of the motor/generator rotation speed Nm, while maintaining a state in which the torque input from the engine 1 and the motor/generator 5 to the second clutch 7, and the transfer torque capacity Tc2 of the second clutch 7, are nearly the same.

Engagement Control of the Second Clutch 7

Because the second clutch 7 still slips in mode 2306, the transmission input torque Ti is the same value as the second clutch transfer torque capacity tTc2.

Therefore, the target second clutch transfer torque capacity tTc2 in mode 2306 is determined according to equation (6), and is set to coincide with the transitional target drive force tFo, as shown in FIG 13.

Engagement Control of the First Clutch 6

Since the engagement of the first clutch 6 is completed in mode 2306 as explained above, the target first clutch transfer torque capacity tTc1 in said mode is set to be the maximum transfer torque capacity, as shown in FIG 13.

Control of Engine 1

In mode 2306, since the engagement of the first clutch 6 is completed and the engine has been started, the target engine torque in HEV mode is set as the target engine torque tTe.

Control of Motor/Generator 5

For motor/generator control when in mode 2306, the target motor/generator rotation speed tNm is determined by the aforementioned equation (8) while gradually reducing the target second clutch slip amount dNc2 to zero so that the change in speed of the target second clutch slip amount dNc2 becomes smaller in conjunction with the reduction of the target second clutch slip amount dNc2, and the rotation speed of the motor/generator 5 is controlled so that the motor/generator rotation speed Nm matches this target value tNm.

Transition Conditions for Transitioning to the Next Mode 2307

The mode transitions to mode 2307 to re-engage the second clutch 7 at the instant t6 in which the target second clutch slip amount dNc2 is continually near zero for a prescribed time period after instant t5 shown in FIG 13. In this manner, by performing the re-engagement of the second clutch 7 when the target second clutch slip amount dNc2 approaches zero, the re-engagement of the second clutch 7 is performed in a state in which the torque input from the engine 1 and the motor/generator 5 to the second clutch 7 nearly matches the second clutch transfer torque capacity tTc2, and even when the transfer torque of the second clutch 7 switches from the transfer torque capacity Tc2 to the combined torque of the engine torque and the motor/generator torque, the torque fluctuation that takes place when the second clutch 7 is re-engaged can be suppressed.

The control mode as described below is performed for mode 2307 in order to re-engage the second clutch 7 while maintaining a state in which the torque input from the engine 1 and the motor/generator 5 to the second clutch 7 and the transfer torque capacity Tc2 of the second clutch 7 are nearly the same.

Engagement Control of the Second Clutch 7

In some cases, controlling the rotation speed of the motor/generator 5 until the difference between the rotation at the front and rear of the second clutch 7 reliably reaches zero requires time due to influence by disturbance torque or due to the degree of accuracy in the rotation sensor.

Accordingly, in mode 2307, when the slip amount of the second clutch 7 is eliminated to some extent, the target transfer torque capacity tTc2 of the second clutch 7 is increased gradually by the open control to be the allowable drive force fluctuation or below as shown in FIG 13, and the second clutch 7 re-engages while smoothly eliminating the slip amount of the second clutch 7.

Engagement Control of the First Clutch 6

Since the first clutch 6 is in an engaged state in mode 2307, the target first clutch transfer torque capacity tTc1 of that mode is the maximum transfer torque capacity as shown in FIG 13.

The Control of Engine 1

In mode 2307, since the first clutch 6 is in an engaged state and the engine has been started, the target engine torque in HEV mode is set as the target engine torque tTe.

Control of Motor/Generator 5

In mode 2307, the target motor/generator torque tTm is held as the command value for instant t6, as shown in FIG 13.

Transition Conditions for Transitioning to the Next Mode 2307

After a prescribed amount of time has passed from instant t6 shown in FIG 13, to reach instant t7, the mode switching transitions to HEV mode and the mode switching from EV mode to HEV mode is completed.

According to the aforementioned control, the second clutch 7 can be re-engaged smoothly without a shock, and the mode switching from EV mode to HEV mode that accompanies the start of the engine can be completed.

However, when the torque input from the engine 1 and the motor/generator 5 to the second clutch 7 and the second clutch transfer torque capacity Tc2 are to be nearly the same by using the rotation speed control of the motor/generator 5, a deviation ΔTm (refer to FIG 13) occurs between the target motor/generator torque tTm and the motor/generator torque Tm in HEV mode at the completion time t7 of mode 2307 because the divergence amount and the disturbance torque occurring between the target engine torque tTe and the actual engine torque Te are compensated by the motor/generator torque.

Therefore, immediately after instant t7 in which the mode transitions to HEV mode, when the target motor/generator torque tTm is changed to the target motor/generator torque for HEV mode, a shock occurs due to the drive force change based on the motor/generator torque deviation ΔTm.

However, if this motor/generator torque deviation ΔTm is continually held, it interferes with the desired charge and discharge amount.

Therefore, the sudden change of the drive force and the shock that occurs in conjunction with this is prevented by gradually making the motor/generator torque deviation ΔTm zero from the instant t7 of FIG 13 in which the mode transitions to HEV mode.

Next is provided an explanation of the mode switch from EV mode to HEV mode via mode 2301a that accompanies the increase in vehicle speed VSP or the decrease in the state of the battery charge SOC with reference to FIG 12 and FIG 14.

Because this mode switch is not executed by the driver pressing on the accelerator, but is a mode switch that requires the engine to start while the driver maintains a constant driving operation, a smooth mode switch and engine start with minimal drive force change (shock) is more desirable than a quick mode switch and engine start.

Accordingly, the mode switch control that goes through mode 2301 a is performed as described below.

The mode switch is initiated by transitioning to mode 2301a at EV to HEV mode switch request instant t1 (FIG. 14) that accompanies an increase in the vehicle speed VSP or a decrease in the state of the battery charge SOC, and the control mode as described below is performed in order to release the hydraulic oil pressure of the second clutch 7 (engagement) as quickly as possible.

Engagement Control of the First Clutch 6

Because a smooth engine start is required rather than a high response engine start, at mode 2301a, cranking of the engine 1 due to the drag torque of the first clutch 6 does not start yet.

Engagement Force Control of the Second Clutch 7

In mode 2301a, in order to prevent any unnecessary release of the drive force generated by the slip of the second clutch 7 caused by the release of the hydraulic oil pressure of the second clutch 7, the hydraulic oil pressure of the second clutch 7 is reduced so that the target second clutch transfer torque capacity tTc2 can be reduced to a value that is slightly larger than a value equivalent to the target transmission input torque tTi, as shown in FIG. 14.

Control of Engine 1

Because mode 2301a occurs prior to starting the engine, the target engine torque tTe is set to zero as shown in FIG 14.

Control of Motor/Generator 5

Because mode 2301a takes place prior to starting the engine and while still in EV operation, the target motor/generator torque tTm is set as the target torque in EV mode, as shown in the example in FIG 14.

Transition Conditions for Transitioning to the Next mode 2302a

The mode transitions from 2301a to 2302a (2302a1 or 2302a2) at instant t2' in which the prescribed time required to release the hydraulic oil of the second clutch 7 has elapsed from instant t1 in FIG 14, and when this takes place and the clutch hydraulic oil temperature is a prescribed value or more, the mode transitions to 2302a1, and when the clutch hydraulic oil temperature is less than the prescribed value, the mode transitions to 2302a2.

The control mode as described below is performed for mode 2302al, which is the mode that is selected for high temperatures, because the temperature of the oil is high and controllability of the clutch hydraulic oil pressure is favorable.

Engagement Control of the Second Clutch 7

For the engagement control of the second clutch 7 in mode 2302a1, the slip of the second clutch 7 is controlled so as to achieve the target slip amount dNc2 of the second clutch 7, and a PI controller may be used as the slip control device for that purpose.

Engagement Force Control of the First Clutch 6

Because smoothness takes precedence over responsiveness for the engine start, the cranking of the engine due to the progression of the engagement of the first clutch 6 is not yet started in this mode 2302a1, as shown in FIG 14.

Control of Engine 1

Because this mode 2302a1 occurs prior to starting the engine, the target engine torque tTe is set to zero, as shown in FIG 14.

Control of Motor/Generator 5

Because this mode 2302a1 occurs while still operating in EV mode, the target motor/generator torque tTm is set to the value for when in EV mode.

On the other hand, in mode 2302a2, which is the mode that is selected for low temperatures, controllability of the clutch hydraulic oil pressure is not favorable because the oil temperature is low, which makes stable slip control of the second clutch 7 difficult, thereby requiring a different control than that performed for high temperatures, such as the open control as described below.

Engagement Control of the Second Clutch 7

In mode 2302a2, the target second clutch transfer torque capacity tTc2 is gradually decreased by a predetermined time change ratio by means of open control.

Engagement Control of the First Clutch 6

Because a smooth engine start is required rather than a high response engine start, the cranking of the engine 1 due to the drag torque of the first clutch 6 is not started yet in this mode 2302a2.

Control of Engine 1

Because this mode 2302a2 occurs prior to starting the engine, the target engine torque tTe is set to zero, as shown in FIG 14.

Control of Motor/Generator 5

Because mode 2302a2 takes place before starting the engine and while operating in EV mode, the target motor/generator torque tTm is set to the target motor/generator torque for when in EV mode.

Transition Conditions for Transitioning to the Next Mode 2303

After instant t2' in FIG 14, the mode transitions from mode 2302a (mode 2302a1 or 2302a2) to mode 2303 either at instant t2 in which the second clutch 7 begins to slip when control is performed by mode 2302a1, or at instant t2 in which the prescribed time required to stabilize slipping has elapsed after the second clutch 7 begins to slip when control is performed by mode 2302a2.

According to the aforementioned control, because the second clutch transfer torque capacity Tc2 becomes the same as the transfer torque at the time of the engagement of the second clutch under a stable state where slipping of the second clutch 7 is maintained at a constant, and almost the same transmission input torque Ti for before and after the slipping of the second clutch 7 can be obtained, the shock can be alleviated by suppressing the fluctuation of the drive force.

An explanation for the reason for this is given below.

When assuming the second clutch 7 is engaged and the transmission input rotation speed Ni is accelerated at a certain acceleration rate dN, the rotating system equation of motion of the motor/generator 5 at that time is expressed by the following equation.

$$(10) \quad Jm \cdot x\ dN = Tm - Tc2$$

Here, Jm is the moment of inertia of the motor/generator 5, Tm is the motor/generator torque, and Tc2 is the transfer torque capacity of the second clutch 7.

Therefore, the second clutch transfer torque capacity tTc2 is expressed by the following equation from equation

(10).

$$(11)\quad Tc2 = Tm - Jm \times dN$$

Further, since the acceleration rate of the motor/generator 5 is also the same as dN at the time of the second clutch 7 engagement when slipping of the second clutch 7 is constant and stable, the rotating system equation of motion of the motor/generator 5 is expressed according to the aforementioned equation (10).

Accordingly, because the transfer torque Tc2 of the second clutch 7 is also expressed by the same equation (11) when the second clutch 7 is engaged, the transfer torque capacity of the second clutch can be automatically adjusted to be the same as the transfer torque at the time of engagement if the slip of the second clutch 7 is constant and stable.

After the mode transitions from mode 2302a (mode 2302a1 or 2302a2) to mode 2303 at instant t2 of FIG 14, a similar control to that performed when going through mode 2301b is performed as shown in FIG 12, and the control as shown after instant t2 of FIG 14 is executed.

In the meantime, because the mode transitions from mode 2302a2 to mode 2303 when a prescribed time required to stabilize slipping has elapsed after the second clutch 7 begins to slip, the following effect can be obtained when going through mode 2302a2 of FIG 12 at low temperatures.

When the second clutch 7 slips, the transfer torque capacity Tc2 of the second clutch almost coincides with the transmission input torque Ti; however, because the clutch hydraulic oil lags behind the target value, the target second clutch transfer torque capacity tTc2 when the second clutch 7 slips becomes slightly smaller than the transmission input torque Ti.

Accordingly, when the clutch hydraulic oil becomes stable, the transfer torque capacity Tc2 of the second clutch 7 becomes slightly smaller than when the clutch begins to slip, which also makes the drive force smaller, but by transitioning to mode 2302 when a prescribed time required to stabilize slipping has elapsed without having the second clutch 7 begin to slip as the only condition, the difference in the drive force level before and after initiating the slip of the second clutch can be suppressed and control accuracy can be improved even when controllability of the clutch hydraulic oil is unfavorable due to a low temperature.

According to the engine starting control device for a hybrid vehicle pertaining to the present embodiment described above, when starting the engine and switching to HEV mode while operating in EV mode, the first clutch 6 is progressively engaged and the drag torque from this causes the engine 1 to start, and the second clutch 7 slip engages in order to set a transfer torque capacity equivalent to the transitional target drive force tFo corresponding to the vehicle driving state to prevent the transfer torque fluctuation of the first clutch that accompanies the engine start from being transferred to the drive wheel 2, and since the torque of motor/generator 5 is controlled so that said motor/generator functions to maintain the slip engagement of second clutch 7, second clutch 7 continually transfers torque by such slip engagement that is equivalent to the transitional target drive force tFo without transferring the torque fluctuation to drive wheel 2 while the engine is being cranked to start engine 1 due to the progressive engagement of first clutch 6, thereby avoiding the shock due to the torque fluctuation and the feeling of releasing the drive force and eliminating the sense of discomfort that accompanies this.

For the present embodiment, when cranking the engine to start it by the progressive engagement of the first clutch 6 while causing slip engagement of the second clutch 7, the torque of the motor/generator 5 can be controlled to set the sum of the drag (slip) torque portion of the first clutch 6 required when starting the engine and the slip torque portion of the second clutch 7 that is the vehicle drive force as the approximate value.

In this manner, the aforementioned operating effect can be achieved by maintaining a stable slipped state of the second clutch 7 while both cranking the engine 1 and generating the drive force.

Furthermore, for the present embodiment, the torque of the motor/generator 5 can be raised in conjunction with the rise in the drag (slip) torque due to the progressive engagement of the first clutch 6.

In this manner, the tendency for the drag (slip) torque portion of the first clutch 6 to reduce the rotation of the motor/generator 5 can be alleviated, the stable slipped state of the second clutch 7 can be maintained and the aforementioned operating effect can be achieved.

In addition, for the present embodiment, when cranking the engine to start it by the progressive engagement of the first clutch 6 while causing slip engagement of the second clutch 7, the motor/generator 5 can be slip servo-controlled so that the second clutch 7 is in a prescribed slipped state.

In this manner, the motor/generator torque is automatically set to ensure the slip of the second clutch 7, the slipped state of the second clutch can be reliably maintained, and the aforementioned operating effect can be effectively achieved.

In addition, for the present embodiment, torque that acts on the motor/generator, besides the motor/generator torque, can be regarded as a disturbance, and a disturbance observer can be provided for estimating such disturbance, and disturbance compensation can be performed by adding this disturbance estimation value to the motor/generator torque.

In this manner, the drag torque of the first clutch 6 and the drag torque of the second clutch 7 can be automatically estimated with a high degree of accuracy to favorably control the rotation reduction of the motor/generator 5 due to these drag torques, the stable slipped state of the second clutch 7 can be maintained and the aforementioned operating effect can be effectively achieved.

Furthermore, for the present embodiment, when starting the engine while switching modes to from EV mode to HEV mode, the slip of the second clutch can be initiated after reducing the transfer torque capacity of the second clutch to approximately the target second clutch transfer torque within the transfer torque range of the second clutch 7 in which EV mode can be realized.

In this manner, the lift in the drive force due to the advancement of the slip in the second clutch 7 by the increase in the motor/generator torque, and the release of drive force due to the advancement of the slip in the second clutch 7 by the reduction in the transfer torque capacity of the second clutch 7 can be prevented, thereby enabling the engine to start and the second clutch 7 to slip without causing much of a shock.

Furthermore, for the present embodiment, the lift in the drive force due to the advancement of the slip in the second clutch 7 by the increase in the motor/generator torque can be prevented by initiating a slip of the second clutch 7 by raising the motor/generator torque after reducing the transfer torque capacity of the second clutch to approximately the target second clutch transfer torque, thereby enabling the engine to start and the second clutch 7 to slip without causing much shock.

Furthermore, for the present embodiment, the slip of the second clutch can be initiated by further reducing the transfer torque capacity of the second clutch 7 after reducing the transfer torque capacity of the second clutch 7 to approximately the target second clutch transfer torque.

In this manner, the release of drive force due to the advancement of the slip in the second clutch 7 by the reduction of the transfer torque capacity of the second clutch 7 can be prevented, thereby enabling the engine to start and the second clutch 7 to slip without causing much shock.

Furthermore, for the present embodiment, the drive force can be increased without waiting for re-engagement of the second clutch 7 by increasing the transfer torque capacity of the second clutch 7 according to the increase of the engine load demand and reducing it according to the reduction of the engine load demand when engaging the slip of the second clutch 7, thereby enabling an improvement to the responsiveness of the drive force.

Furthermore, for the present embodiment, the engine 1 can be reliably cranked and started by the drag torque of the first clutch 6 by setting the transfer torque capacity of the first clutch 6 for when starting the engine 1 due to the drag torque of the first clutch 6 greater than the friction of the engine.

Furthermore, for the present embodiment, the target second clutch transfer torque capacity tTc2 can be set to a value within a range of values obtained by subtracting the friction portion of the engine from the maximum torque of the motor/generator 5 during the time until engine 1 is started. In this manner, the adverse effects of excessively raising the transfer torque capacity of the second clutch 7 can be avoided, while at the same time ensuring effective cranking of the engine 1.

When excessively raising the transfer torque capacity of the second clutch 7, this, along with the transfer torque capacity of the first clutch 6, exceeds the load that can be supported by the motor/generator 5, causing the motor/generator rotation speed to slow down, and the prescribed slipped state of the second clutch 7 can no longer be maintained. However, according to the present embodiment, the occurrence of such circumstances can be avoided.

Furthermore, for the present embodiment, the target first clutch transfer torque tTc1 can be set to a value within a range of values obtained by subtracting the target second clutch transfer torque capacity tTc2 from the maximum torque of the motor/generator 5 during the time until engine 1 is started.

In this manner, because all of the motor/generator torque that is leftover when the drive force is generated is used to crank the engine 1, the start of the engine 1 is performed more quickly and the responsiveness of the drive force generation can be improved.

Furthermore, for the present embodiment, the increase in the difference between the front and rear rotation of second clutch 7 that takes place as the motor/generator rotation speed rises in conjunction with the reverse in the slip torque load of first clutch 6 that is caused by the reverse in the rotational difference between the engine rotation speed and the motor/generator rotation speed can be prevented by reducing the motor/generator torque so that it coincides with the reversal in the rotational difference between the engine rotation speed and the motor/generator rotation speed when the engine rotation speed overshoots the motor/generator rotation speed, and as a result, the increase in the amount of heat generated by second clutch 7 can be prevented and its durability can be improved.

Furthermore, for the present embodiment, an increase can be made to occur in the motor/generator torque immediately after engagement of the first clutch 6 from a state in which the engine rotation speed is greater than the motor/generator rotation speed, and a reduction can be made to occur in the motor/generator torque immediately after engagement of the first clutch 6 from a state in which the engine rotation speed is less than the motor/generator rotation speed.

In this manner, the slip can be maintained to a prescribed amount during the slipping of the second clutch 7 by changing the motor/generator torque to coincide with the slip load that occurs at the time of engagement of the first clutch 6, and the problem of heat generation in the second clutch due to the increase in this slip amount, and the problem of drive force fluctuation due to the inability to ensure this slip amount can be alleviated; and if the second clutch 7 is in an engaged state, the drive force fluctuation due to the transfer torque fluctuation of the first clutch 6 can be suppressed by the change in the motor/generator torque.

Furthermore, for the present embodiment, the motor/generator 5 can be controlled so that the change ratio of the input/output rotation speed difference of the second clutch 7 is close to zero when re-engaging the second clutch 7 after the starting of engine 1 has been completed.

In this manner, there is no rotation difference in the input/output rotation speed difference CL2 of the second clutch 7, so even if the transfer torque of the second clutch 7 were to be switched from the transfer torque capacity to the total sum value of the engine torque and motor/generator torque, the shock that occurs at the time of re-engagement of the second clutch 7 can be suppressed with little fluctuation of the transfer torque.

Second Embodiment

In the aforementioned First Embodiment, the target transfer torque capacity tTc2 of the second clutch 7 when in EV mode was determined as follows.

In other words, the target second clutch transfer torque capacity tTc2 was set as the maximum drive force equivalent value evTmax in EV mode (the second clutch maximum transfer torque capacity for EV). (This corresponds to step S68).

The objective of the following Second Embodiment is to improve the responsiveness of the starting of the engine, and to set the target second clutch transfer torque capacity tTc2 to a marginal value that does not slip and that corresponds to the target drive force tFo regardless of whether or not a switch command is made to switch to HEV mode while selecting EV mode.

Therefore, the target second clutch transfer torque capacity does not need to be reduced from the maximum torque capacity at the time of complete engagement to a small value that corresponds to the target drive force tFo when there is a switch command from EV mode to HEV mode, and the starting the slipping of second clutch 7 and the cranking of the engine 1 can be performed more quickly, thereby improving the responsiveness of the start of the engine.

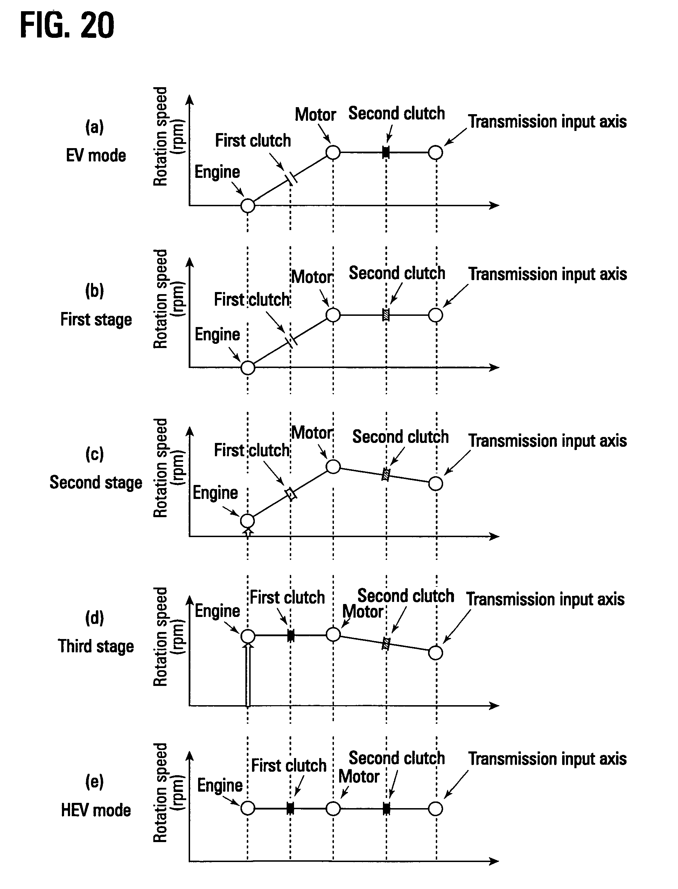

The benefits of the present invention are explained hereinafter with reference to FIG 20, and a detailed description of the contents of the control operation is given with reference to the flowchart.

In the horizontal axis of FIG 20 and placed in the same arrangement are the engine 1, first clutch 6, motor/generator 5, second clutch 7, and the transmission input axis 3a, which are shown in FIG 1 through FIG 3, and in the longitudinal axis it shows a scale of each rotation speed; and (a) in the same figure shows an example of the rotation speed of the engine 1, first clutch 6, motor/generator 5, second clutch 7, and the transmission input axis 3a in EV mode; and (e) in the same figure shows an example of the rotation speed of the engine 1, first clutch 6, motor/generator 5, second clutch 7, and the transmission input axis 3a in HEV mode; and the (b) through (d) of the same figure show an example of the rotation speed of the engine 1, first clutch 6, motor/generator 5, second clutch 7, and the transmission input axis 3a in sequential stages for when switching from EV mode to HEV mode.

EV mode, as shown in FIG 20(a), operates the vehicle by only the power from the motor/generator 5 by releasing the first clutch 6, stopping the engine 1 (rpm = 0), and engaging the second clutch 7.

HEV mode, as shown in FIG 20(e), operates the vehicle by only the power from the engine 1, or by the power from the engine 1 and the motor/generator 5 by engaging the first clutch 6, driving the engine 1, and engaging the second clutch 7.

Accordingly, when the mode switches from EV mode to HEV mode, the engine 1 must be started by cranking it by means of the progressive engagement of the first clutch 6.

In order to prevent the engagement shock of the first clutch 6 and the torque fluctuation at the time of starting the engine from being transferred to the wheel 2 when the engine is started, a state is first created in EV mode shown in FIG 20(a) in which the transfer torque capacity of the second clutch as shown in the first stage of FIG 20 (b) is reduced so that the aforementioned torque fluctuation and shock can be absorbed by the slip that takes place at this stage.

Then, as shown in the second stage in FIG 20 (c), the engine is cranked due to the progressive engagement of the first clutch 6, next, as shown in the third stage in FIG 20(d), the starting of the engine 1 is completed due to the complete engagement of the first clutch 6, and the mode transitions to the HEV mode in FIG 20(e).

However, when the second clutch 7 is sustained in a completely engaged state in EV mode as shown in FIG 20(a), the decrease of the transfer torque capacity of the second clutch 7 which should be performed during the aforementioned engine start is done from a completely engaged state making the responsiveness of the cranking of the engine via the progressive engagement of the first clutch 6 to be delayed by that amount after the transfer torque capacity of the second clutch 7 is reduced, and the responsiveness of the starting of the engine deteriorates.

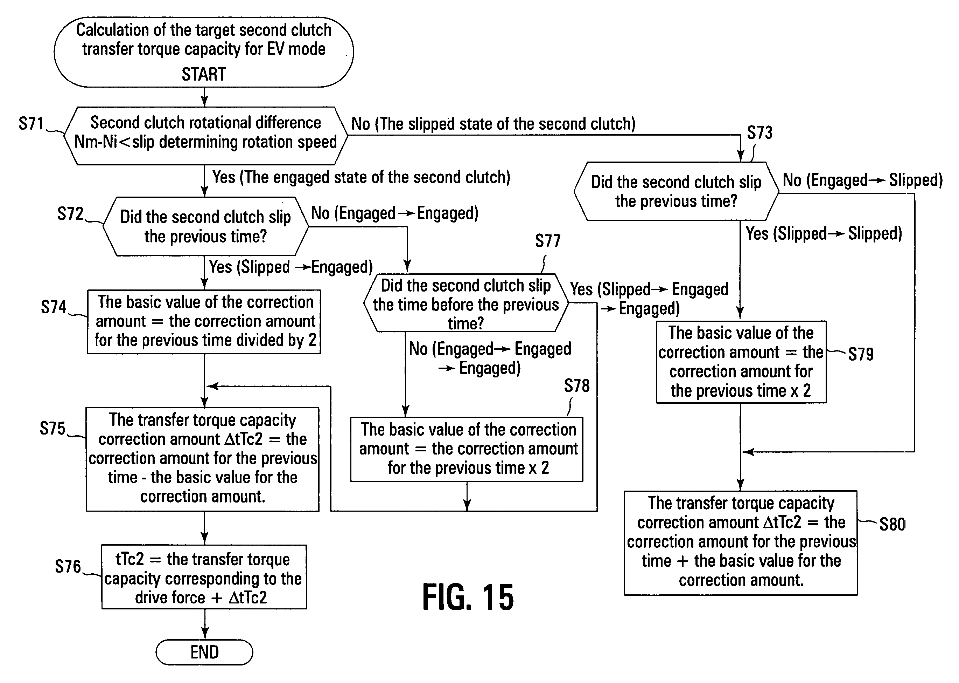

For the present embodiment, in order to achieve the objective of the present invention, which is to prevent such degradation of the responsiveness of the starting of the engine, the target transfer torque capacity tTc2 of the second clutch 7 in EV mode is obtained by the control program shown in FIG 15, as described below.

First, at step S71 it is determined whether or not the second clutch 7 is currently in an engaged state or a slipped state by determining whether or not the second clutch 7 slip rotation = (Nm - Ni) is at the slip determining rotation speed or below.

Regardless of the determined result, at steps S72 and S73 the program checks whether or not the previous slip determination of the second clutch 7 was in a slipped state.

When it is determined at step S71 that the second clutch 7 is currently in an engaged state and at step S72 it is determined that the second clutch 7 was previously in a slipped state, or, in other words, when the second clutch 7 switches from a slipped state to an engaged state, this indicates that the transfer torque capacity is at its limit to where the second clutch 7 does not slip; in other words, this indicates that it is immediately after the point at which the torque capacity that corresponds to the drive force that should be transferred is reached. Therefore, at step S74, the basic value for the torque capacity correction amount for the second clutch is set to one half of the previous correction amount. Then, at step S75, the transfer torque capacity correction amount ΔtTc2 is obtained by subtracting the basic value of the torque capacity correction amount from the previous correction amount; and finally at step S76, the target transfer torque capacity tTc2 of the second clutch 7 is set as the sum value of the transfer torque capacity that corresponds to the drive force tFo and the aforementioned transfer torque capacity correction amount ΔtTc2.

When it is determined at step S71 that the second clutch 7 is currently in an engaged state, and at step S72, it is determined that the second clutch 7 was previously not in a slipped state, or, in other words, when the second clutch 7 is sustained in an engaged state the previous time and the present time, at step S77, the program checks whether or not the second clutch 7 was in a slipped state two times previous, which is one time prior to the previous time.

When it is determined at step S77 that the second clutch 7 was not in a slipped state two times previous, or, in other words, when the second clutch 7 was in an engaged state two times previous-the previous time, and the present time-this indicates that the transfer torque capacity of the second clutch 7 is more than the drive force that should be transferred. Therefore, at step S78, the basic value of the torque capacity correction amount of the second clutch is set to be double that of the previous correction amount. Then, at step S75, the transfer torque capacity correction amount ΔtTc2 is obtained by subtracting the basic value of the torque capacity correction amount from the previous correction amount; and finally at step S76, the target transfer torque capacity tTc2 of the second clutch 7 is set as the sum value of the transfer torque capacity that corresponds to the drive force tFo and the aforementioned transfer torque capacity correction amount ΔtTc2.

However, when it is determined at step S77 that the second clutch 7 was in a slipped state two times previous, or, in other words, the second clutch 7 was in a slipped state two times previous but has been in an engaged state for two successive times-the previous time and the present time-this indicates that the transfer torque capacity of the second clutch 7 is slightly larger than the drive force that should be transferred. Therefore, the control program proceeds to step S75 without performing the correction of the basic value of the torque capacity correction amount of the second clutch, as was done in steps S74 and S78, and the transfer torque capacity correction amount ΔtTc2 for this step is obtained by subtracting the basic value of the torque capacity correction amount from the previous correction amount. Finally at step S76, the target transfer torque capacity tTc2 of the second clutch 7 is set as the sum value of the transfer torque capacity that corresponds to the drive force tFo and the aforementioned transfer torque capacity correction amount ΔtTc2.

When it is determined at step S71 that the second clutch 7 is currently in a slipped state, and it is determined at step S73 that the second clutch 7 was in a slipped state the previous time, or, in other words, when the second clutch 7 is sustained in a slipped state for two successive times, this indicates that the second clutch 7 is significantly insufficient in relation to the drive force that should be transferred. Therefore, at step S79, the basic value of the torque capacity correction amount of the second clutch is set to be twice that of the previous correction amount, and at step S80, the transfer torque capacity correction amount ΔtTc2 is obtained by adding the basic value of the torque capacity correction amount to the previous correction amount. Finally, at step S76, the target transfer torque capacity tTc2 of the second clutch 7 is set as the sum value of the transfer torque capacity that corresponds to the drive force tFo and the aforementioned transfer torque capacity correction amount ΔtTc2.

However, when it is determined at step S71 that the second clutch 7 is currently in a slipped state, and it is determined at step S73 that the second clutch 7 was not in a slipped state the previous time, or, in other words, when the second clutch 7 switches from an engaged state to a slipped state, this indicates that the second clutch 7 is in a range that is slightly insufficient in relation to the drive force that should be transferred. Therefore, at step S80, the transfer torque capacity correction amount ΔtTc2 is obtained by adding the basic value of the torque capacity correction amount to the previous correction amount without performing the correction of the basic value of the torque capacity correction amount as in step S79. Finally, in step S76, the target transfer torque capacity tTc2 of the second clutch 7 is set as the sum value of the transfer torque capacity that corresponds to the drive force tFo and the aforementioned transfer torque capacity correction amount ΔtTc2.

At Step S68 of FIG 6 the engagement of the clutch 7 is controlled so that the target second clutch transfer torque capacity tTc2 is realized by transmitting the target transfer torque capacity tTc2 of the second clutch 7 obtained as shown in FIG 15 to the second clutch 7 as shown in FIG 5.

However, by reducing the transfer torque capacity of the second clutch to a torque capacity that corresponds to the drive force that should be transferred when transitioning to EV mode by controlling the transfer torque capacity of the second clutch 7 in EV mode so that it becomes the aforementioned target value tTc2, the transfer torque capacity of the second clutch 7 is maintained at this reduced torque capacity during EV mode selection. Therefore, the reducing of the torque capacity of the second clutch 7 that should be performed while starting the engine via the progressive engagement of the first clutch 6 when switching modes from EV mode to HEV mode begins from a lower torque capacity than the completely engaged state, so such reduction of the torque capacity of the second clutch 7 is executed quickly, thereby improving the responsiveness for starting the engine.

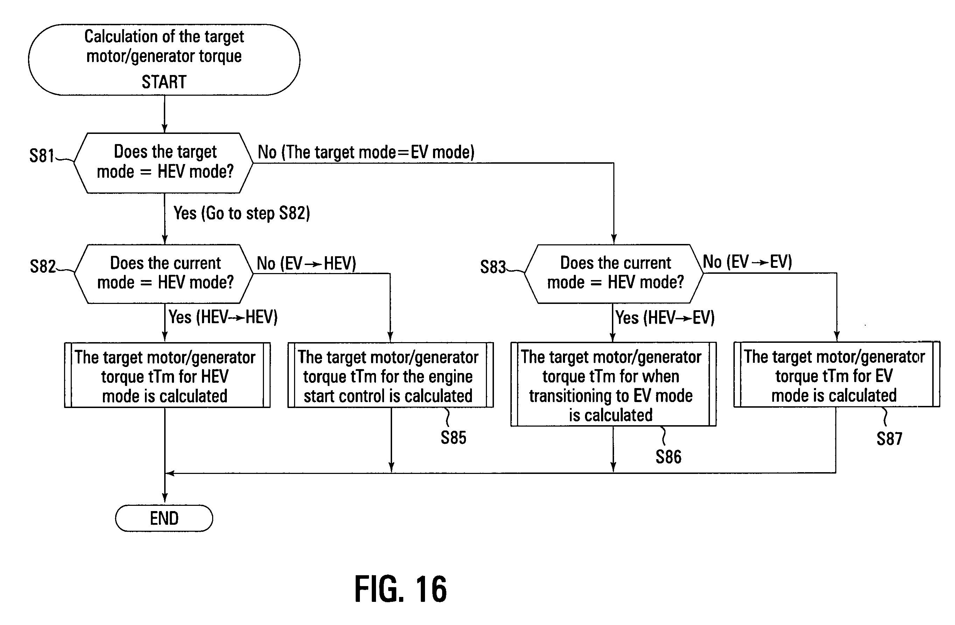

As explained at steps S67 and S68 of FIG 6, the target first and second clutch transfer torque capacities tTc1 and tTc2 are established; and at step S66, the target motor/generator torque tTm is obtained by the control program shown in FIG 16 through FIG 19.

First, at step S81 of FIG 16, it is determined whether or not the target operation mode determined at step S63 of FIG 6 is HEV mode or not (EV mode), and then, regardless of the result, at steps S82 and S83, the program checks whether the current operation mode is HEV mode or not (EV mode).

When it is determined at step S81 that the target operation mode is HEV mode, and at step S82 it is determined that the current operation mode is also HEV mode, or, in other words, when HEV mode should be sustained, the target torque tTm of the motor/generator 5 is set to the target value for HEV mode at step S84.

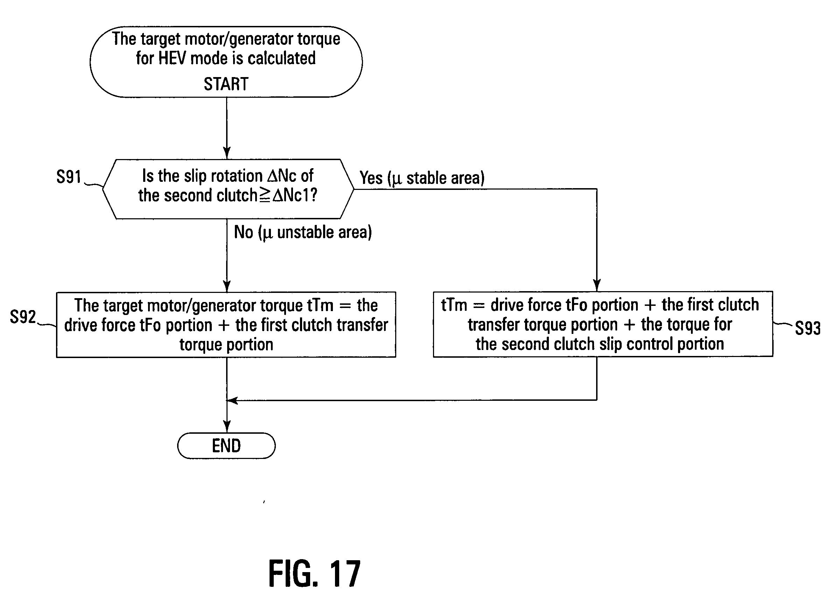

This HEV mode target motor/generator torque tTm is determined as shown in FIG 17, and at step S91, the program checks whether or not the slip rotation ΔNc of the second clutch 7 is the set rotation speed ΔNc1 or more.

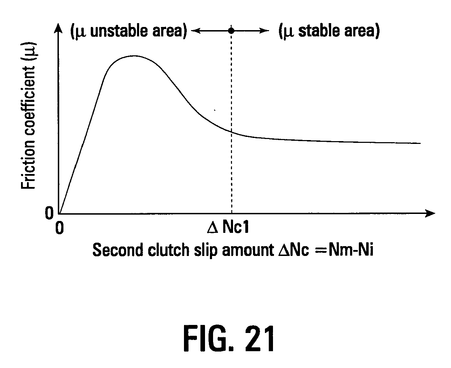

Next is provided a description of the set slip rotation ΔNc1. So that all of the clutches are consistent, the change property of the clutch friction coefficient μ in relation to the second clutch slip rotation ΔNc = Nm - Ni is normally, for instance, more or less a certain slip rotation range on either side of the slip rotation where the coefficient of friction μ becomes its maximum as shown in the example in FIG 21, and is an area where the change ratio of the clutch friction coefficient μ in relation to the slip rotation is comparably larger and in which the coefficient of friction is unstable. In addition, a large slip rotation range that exceeds this and that is greater than slip rotation ΔNc1 is an area where the change ratio of the clutch friction coefficient μ in relation to slip rotation is comparatively small and in which the coefficient of friction is stable.

When applying feedback control to the motor/generator torque tTm so that the slip rotation of the second clutch 7 that is in the area in which the coefficient of friction is unstable, or where ΔNc < ΔNc1, becomes the target value, the coefficient of friction of the second clutch 7 changes greatly by a slight change to the torque, and the transfer torque capacity of the second clutch 7 also changes greatly, causing clutch judder to occur. Therefore, it better to perform such feedback control in the area in which the coefficient of friction is stable, or where ΔNc ≧ ΔNc1, but is better to perform feed forward control in the area in which the coefficient of friction is unstable, or where ΔNc < ΔNc1.

It is from this perspective for the present embodiment, that it is determined whether or not the slip rotation ΔNc of the second clutch 7 it is the area in which the coefficient of friction is stable, or the area in which the coefficient of friction is unstable, by determining at step S91 of FIG 17 whether or not the slip rotation ΔNc of the second clutch 7 is the set rotation speed ΔNc 1 or more.

When it is determined at step S91 that it is the area in which the coefficient of friction is unstable, or where ΔNc < ΔNc1, feed forward control is performed at step S92 so that the target motor/generator torque tTm is set as the sum value of the drive force tFo portion and the transfer torque portion of the first clutch 6; and when it is determined at step S91 that it is the area in which the coefficient of friction is stable, or where ΔNc ≧ ΔNc1, feedback control is performed at step S93 so that the target motor/generator torque tTm is the sum value of the drive force tFo portion, the transfer torque portion of the first clutch 6, and the torque of the second clutch slip control portion; and the target motor/generator torque tTm obtained in this manner is transmitted to the motor/generator controller 22, as shown in FIG. 4

When it is determined at step S81 in FIG 16 that the target operation mode is HEV mode and at step S82 that the current operation mode is EV mode, in other words, when the mode switches from EV mode to HEV mode, the target torque tTm of the motor/generator 5 is set to the target value in step S85 for starting the engine when switching modes.

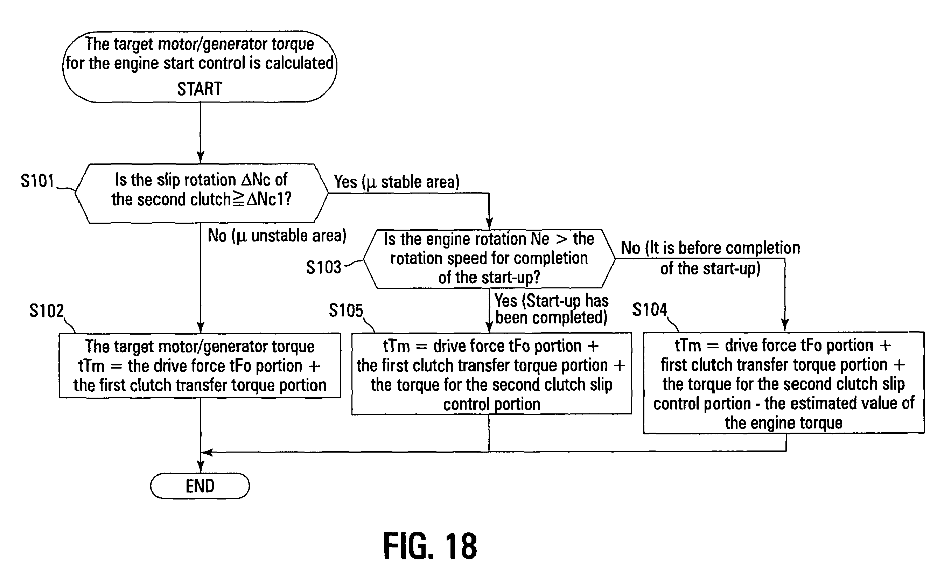

The target motor/generator torque tTm for engine start control is determined as shown in FIG 18, and first, at step S101 it is determined whether it is an area in which the coefficient of friction is stable or an area in which the coefficient of friction is unstable by determining whether or not the slip rotation ΔNc of the second clutch 7 is the set rotation speed ΔNc 1 (refer to FIG 21) or more.

When it is determined at step S101 that it is an area in which the coefficient of friction is unstable, or where ΔNc < ΔNc1, feed forward control is performed in step S102 that corresponds to the motor/generator torque control means in the present invention, so that the target motor/generator torque tTm is the sum value of the drive force tFo portion and the transfer torque portion of the first clutch 6.

The target motor/generator torque tTm obtained in this manner is transmitted to the motor/generator controller 22, as shown in FIG. 4.

When the slip rotation feedback control of the second clutch 7 is performed by means of the motor/generator torque control in such an area in which the coefficient of friction is unstable, the change in the clutch friction coefficient (torque capacity) in relation to the slip rotation change during feedback control is large and there is a concern that the drive force may deviate from the target value tFo or that a shock may occur; however, according to the present embodiment, these problems can be avoided by not performing the slip rotation feedback control of the second clutch 7 by means of the motor/generator torque control in the area in which the coefficient of friction is unstable.

Furthermore, the target drive force tFo can be effectively achieved by making the target motor/generator torque tTm to be the sum value of the drive force tFo portion and the transfer torque portion of the first clutch 6, and in addition, cranking of the engine due to the progressive engagement of the first clutch 6 can be performed as prescribed.

When it is determined at step S101 that it is an area in which the coefficient of friction is stable, or where $\Delta Nc \geqq \Delta Nc1$, it is then determined at step S103 whether the engine has been started or not by determining whether or not the engine rotation speed Ne is the startup completion rotation speed or more.

If it is before the engine is started, then at step S104, which corresponds to the slip rotation control means for the second clutch pertaining to the present invention, the target motor/generator torque tTm is set at a value in which the engine torque estimated value is subtracted from the sum value of the drive force tFo portion, transfer torque portion of the first clutch 6, and the torque of the second clutch slip control portion; and this target motor/generator torque tTm is transmitted to the motor/generator controller 22, as shown in FIG. 4.

Accordingly, slip rotation feedback control is performed in order to sustain the slip rotation of the second clutch 7 at the target value by means of the motor/generator torque control, and extra engine torque does not get transferred to the wheel 2a so that drive force does not exceed the target drive force tFo.

At this point, the slip rotation target value of the second clutch 7 is the set value $\Delta Nc1$, or more, and is also the lower limit required to make the drive force fluctuation to the wheel 2 to be within the allowable range, thus alleviating the transfer of the shock due to the engagement of the first clutch 6 and the torque fluctuation while starting the engine to the wheel 2.

In addition, although for the present embodiment, the slip rotation of the second clutch 7 was maintained at the target value by means of the motor/generator torque control, needless to say, the target slip rotation may be maintained by means of the transfer torque capacity control of the second clutch.

When it is determined at step S 103 that the engine start has been completed, at step S105, the target motor/generator torque tTm is set as the sum value of the drive force tFo portion, the transfer torque portion of the first clutch 6, and the torque of the second clutch slip control portion, and this target motor/generator torque tTm is instructed to the motor/generator controller 22, as shown in FIG. 4.

When it is determined at step S81 in FIG 16 that the target operation mode is EV mode, and it is determined at step S83 that the current operation mode is HEV mode, in other words, when the mode switches from HEV mode to EV mode, in step S86, the target torque tTm of the motor/generator 5 is set to the target value for when transitioning to EV mode, and this target motor/generator torque tTm is transmitted to the motor/generator controller 22, as shown in FIG. 4.

When it is determined at step S81 that the target operation mode is EV mode, and it is determined at step S83 that the current operation mode is also EV mode, in other words, when EV mode should be maintained, the target motor/generator torque tTm is set to the target value for EV mode at step 587.

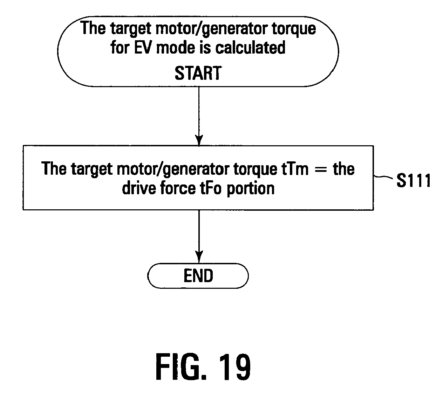

Said target motor/generator torque tTm for EV mode is obtained according to the control program shown in FIG 19.

In other words, at step S111, the target motor/generator torque tTm is set to be a value that corresponds to the drive force tFo, and transmits this target motor/generator torque tTm to the motor/generator controller 22, as shown in FIG. 4.

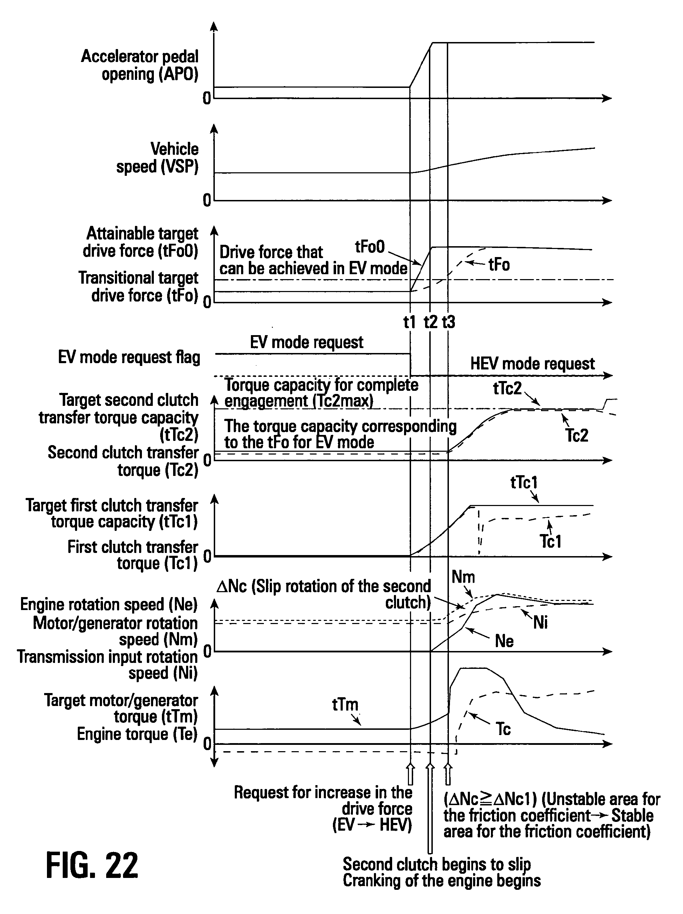

The effects of the device for improving the engine startup response that constitutes the aforementioned embodiment is explained hereinafter with reference to a time chart for when the accelerator pedal opening APO is increased at instant t1 while operating in EV mode, as shown in FIG 22.

Drive force control is executed in which the attainable target drive force tFo0 that corresponds to the increase in the accelerator pedal opening APO shown in the drawing is applied, and the transitional target drive force tFo having the prescribed response in relation to this is set as shown in the drawing, and the actual drive force follows the transitional target drive force tFo.

In the meantime, at instant t1 when the accelerator pedal opening APO is increased, an HEV mode request for using power from the engine is given based on the determination that the attainable target drive force tFo0 cannot be achieved in EV mode by conducting a comparison to the drive force that can be achieved in EV mode, the EV mode request flag switches from a high level to a low level and the EV→HEV switch command is generated.

The target first clutch transfer torque capacity tTc1 is gradually increased from the EV→HEV switch start command time t1, and engagement of the first clutch 6 progresses as is evident from the change over time in the transfer torque Tc1.

By raising the target motor/generator torque tTm for only the torque portion (transfer torque portion of the first clutch 6) which is consumed in the cranking of the engine 1 performed in conjunction with such progressive engagement of the first clutch 6 from the target drive force tFo (refer to Step S102 of FIG 18), clutch 7 starts to slip from instant t2 and causes the slip rotation $\Delta Nc$ (= Nm - Ni) and the engine 1 is cranked as shown by raising the rate of the engine rotation speed Ne.

The start of the slipping of second clutch 7 and the cranking of the engine I are realized by having the target second clutch transfer torque capacity tTc2 set at the smallest limit for transferring the target drive force tFo when in EV mode.

However, according to the present embodiment, in order to set the target second clutch transfer torque capacity tTc2 at a small value that corresponds to the target drive force tFo from when selecting EV mode (refer to FIG 15), there is no need to reduce the target second clutch transfer torque capacity tTc2 from the maximum torque capacity Tc2max for complete engagement to a small value that corresponds to the target drive force tFo at the EV mode to HEV mode switch command time t1, and the slip of the second clutch 7 and the cranking of the engine 1 can be started more quickly, thereby improving the engine starting response.

Furthermore, the following effects can be achieved by performing feed forward control (refer to step S102 in FIG 18) in which the target motor/generator torque tTm is the target drive force tFo portion + the first clutch transfer torque portion (engine cranking torque) during instants t2 to t3 where the slip rotation $\Delta Nc$ of the second clutch 7 is less than the set rotation speed $\Delta Nc1$, or the area in which the coefficient of friction is unstable.

In other words, when slip rotation feedback control of the second clutch 7 is performed by means of the motor/generator torque (tTm) control in this area in which the coefficient of friction is unstable, the change in the clutch friction coefficient (torque capacity) is large in relation to the slip rotation change that took place during the feedback control, causing a concern that the drive force may vary from the target value tFo resulting in the generation of a shock, but these concerns can be avoided.

Furthermore, by setting the target motor/generator torque tTm as the sum value of the drive force tFo portion and the transfer torque portion of the first clutch 6, the target drive force tFo can be effectively achieved and the cranking of the engine due to the progressive engagement of the first clutch 6 can be performed as prescribed.

On the other hand, by setting the target motor/generator torque tTm as the (target drive force tFo portion) + {the first clutch transfer torque portion (engine cranking torque)} + (the torque for the second clutch slip control portion) - (engine torque estimated value) (refer to step S104 in FIG 18), after the instant t3 when the slip rotation $\Delta Nc$ of the second clutch 7 becomes the set rotation speed $\Delta Nc1$, or more, and enters into the area in which the coefficient of friction is stable, feedback control is performed to maintain the slip rotation $\Delta Nc$ of the second clutch 7 at the target value in which the drive force fluctuation is within the allowable range, thus alleviating the transfer of the shock due to the engagement of the first clutch 6 (refer to the waveform for the first clutch transfer torque Tc1 shown in FIG 22) and the torque fluctuation while starting the engine to the wheel 2.

This application claims priority from Japanese Patent Application Nos. 2005-260631, filed on 8th September 2005, and 2005-260888, filed on 8th September 2005, the contents of which are incorporated herein by reference.

## Claims

**1.** A drive device for a hybrid vehicle, comprising:

an engine and a motor/generator;
a first clutch disposed between the engine and the motor/generator and operable to change a transfer torque capacity therebetween;
a second clutch disposed between the motor/generator and a drive wheel and operable to change a transfer torque capacity therebetween; and
a control device operable to control the engine, the motor/generator, the first clutch and the second clutch;

wherein the control device:

is arranged to select an electric operation mode by releasing the first clutch while engaging the second clutch and a hybrid operation mode by engaging both the first clutch and the second clutch;
comprises a first clutch engagement control means for starting the engine by engagement progression of the first clutch when changing modes during operation from the electric operation mode to the hybrid operation mode;
comprises a second clutch engagement control means that causes a slip engagement of the second clutch when starting the engine; and
comprises a motor/generator control means for controlling the motor/generator so that the motor/generator operates so as to maintain the slip engagement.

**2.** A device is claimed in claim 1, wherein the second clutch engagement control means is arranged to cause a slip engagement of the second clutch so as to reach a transfer torque capacity equivalent to the target drive force corresponding to the vehicle drive state.

**3.** A device as claimed in claim 1 or claim 2 comprising an automatic transmission disposed between the second clutch and the drive wheel and/or between the motor/generator and the second clutch.

**4.** A device as claimed in any preceding claim comprising an automatic transmission disposed between the motor/generator and the drive wheel, whereby one of the clutches in the automatic transmission that governs the torque transfer is used as the second clutch.

**5.** A device as claimed in any preceding claim, wherein the motor/generator control means is arranged to control the motor/generator torque so as to be close to the sum of the slip torque portion of the first clutch required at the start of the engine and the slip torque portion of the second clutch that is the vehicle drive force when starting the engine by the engagement progression of the first clutch while slip-engaging the second clutch.

**6.** A device as claimed in any preceding claim, wherein the motor/generator control means is arranged to raise the torque of the motor/generator to accompany the rise in the slip torque due to the engagement progression of the first clutch.

**7.** A device as claimed in any preceding claim, wherein the motor/generator control means is arranged to use slip servo control of the motor/generator so that the second clutch achieves a prescribed slipped state when starting the engine by the engagement progression of the first clutch while slip-engaging the second clutch.

**8.** A device as claimed in any preceding claim, wherein the motor/generator control means comprises a disturbance observer that regards other torque that acts on the motor/generator, besides the motor/generator torque, as disturbance, estimates such disturbance, and adds a disturbance estimation value to the motor/generator torque to perform disturbance compensation.

**9.** A device as claimed in any preceding claim, wherein the second clutch engagement control means and the motor/generator control means are arranged to begin the slip of the second clutch after reducing the transfer torque capacity of the second clutch to approximately the target second clutch transfer torque within the transfer torque range of the second clutch in which EV mode can be realized when starting the engine.

**10.** A device as claimed in any preceding claim, wherein the second clutch engagement control means is arranged to increase the transfer torque capacity of the second clutch according to the increase of the engine load demand and to reduce it according to the reduction of the engine load demand when engaging the slip of the second clutch.

**11.** A device as claimed in any preceding claim, wherein the first clutch engagement control means is arranegd to set the transfer torque capacity of the first clutch to be greater than the friction of the engine at the time of starting the engine.

**12.** A device as claimed in any preceding claim, wherein the second clutch engagement control means is arranged to set the target second clutch transfer torque to a value within a range of values obtained by subtracting the friction portion of the engine from the maximum torque of the motor/generator during the time until the engine is started.

**13.** A device as claimed in any preceding claim, wherein the first clutch engagement control means is arranged to set the target first clutch transfer torque to a value within a range of values obtained by subtracting the target second clutch transfer torque from the maximum torque of the motor/generator during the time until the engine is started.

**14.** A device as claimed in any preceding claim, wherein the motor/generator control means is arranged to:

a) reduce the motor/generator torque when the engine rotation speed overshoots the motor/generator rotation speed so that it accompanies the reversal in the rotational difference between the engine rotation speed and the motor/generator rotation speed; and/or
b) increase the motor/generator torque immediately after engagement of the first clutch from a state in which the engine rotation speed is higher than the motor/generator rotation speed, and reduce the motor/generator torque immediately after engagement of the first clutch from a state in which the engine rotation speed is lower than the motor/generator rotation speed.

**15.** A method of switching operation modes of a drive device for a hybrid vehicle, comprising:

selecting an electric operation mode by releasing a first clutch disposed between an engine and a motor/generator while engaging a second clutch disposed between the motor/generator and a drive wheel, or a hybrid operation mode by engaging both the first clutch and the second clutch;
starting the engine by engagement progression of the first clutch when changing modes during operation from the electric operation mode to the hybrid operation mode;
causing a slip engagement of the second clutch to prevent the transfer torque fluctuation of the first clutch that accompanies the starting of the engine from being transferred to the drive wheel; and
controlling the motor/generator so that the motor/generator operates so as to maintain the slip engagement.

**16.** A method as claimed in any preceding claim wherein causing the slip engagement comprises causing the slip engagement of the second clutch so as to reach a transfer torque capacity equivalent to the target drive force corresponding to the vehicle drive state.

**17.** A vehicle having a device or adapted to use a method as claimed in any preceding claim.

FIG. 1

1
1a
6
5
4
3a
3
3b
2
Automatic transmission
8
2
11
12
7
13
14
Engine rotation speed Ne
Motor/ generator rotation speed Nm
Input rotation speed Ni
Output rotation speed No

FIG. 2

1
1a
6
5
4
3a
3
3b
2
Automatic transmission
8
2
11
12
13
14
7
Engine rotation speed Ne
Motor/ generator rotation speed Nm
Input rotation speed Ni
Output rotation speed No

FIG. 3

1
1a
6
5
4
3a
3
3b
2
Automatic transmission
8
2
11
12
13
7
14
Engine rotation speed Ne
Motor/ generator rotation speed Nm
Input rotation speed Ni
Output rotation speed No

Power Train for a hybrid Vehicle
1
Engine
5
Motor/ generator
11
Ne
12
Nm
13
Ni
14
No
6
First clutch
7
Second clutch
(tTc1)
(tTc2)
(tTe)
Engine Controller
21
(Ne) (Nm) (Ni) (No)
Integrated Controller
(APO) (SOC)
20
(tTm,tNm)
22
Motor/ generator controller
10
Inverter
Battery
9
16
(SOC)
APO
15


FIG. 4

Accelerator pedal opening (APO)
Vehicle speed (VSP)
State of battery charge (SOC)
30
Target drive force calculation unit
Atttainable target drive force (tFo0)
40
Driving mode (EV,HEV) selection unit
Target operating mode
50
Target charge/discharge calculation unit
Target charge/discharge electric power (tP)
60
Operating point command unit
Target engine torque (tP)
Target motor/generator torque (tTm)
Target first clutch solenoid current (Is1)
Target second clutch transfer torque capacity (tTc2)
Shift (target gear position)
70
Transmission controller
Drives the corresponding solenoid in the automatic transmission

FIG. 5

Processing performed at the Operating Point Command Unit
START
Transitional target drive force (tFo) calculated
S61
Target transmission input torque Ti calculated
S62
Driving mode selected
S63
Target gear position SHIFT calculated
S64
Target engine torque tTe calculated
S65
Target motor/generator tTm calculated
S66
Target first clutch transfer torque capacity tTc1 calculated
S67
Target second clutch transfer torque capacity tTc2 calculated
S68
END

FIG. 6

Attainable target drive force (tFo0)
Large
Accelerator pedal opening (APO)
0
0
Vehicle speed (VSP)

FIG. 7

Accelerator pedal opening (APO)
A'
HEV mode area
EV mode area
HEV to EV switching line
EV to HEV switching line
A
C
B
B'
0
0
Vehicle Speed (VSP)

FIG. 8

Target charge and discharge capacity (tP)
Battery Charge
0
Battery Discharge
0
State of battery charge (SOC)

FIG. 9

Accelerator pedal opening (APO)
Vehicle speed (VSP)
0
0
1 ← 2
1 → 2
2 ← 3
2 → 3
3 ← 4
3 → 4
4 ← 5
4 → 5

FIG. 10

Maximum engine torque
(Temax)
0
0
Engine rotation speed (Ne)

FIG. 11

EV mode
A switch request takes place due to a drop in the SOC or an increase in vehicle speed.
A switch request takes place due to the APO (increase in target drive force.)
Mode 2301a
Prescribed amount of time has elapsed and the oil temperature is a prescribed value or more.
Prescribed amount of time has elapsed and the oil temperature is less than a prescribed value.
Mode 2302a1
Mode 2302a2
A slip occurs in the second clutch
A prescribed amount of time has elapsed since a slip occurred in the second clutch
Mode 2303
Slipping of the second clutch begins
Mode 2301b
Ne ≥ Nm
Mode 2304
Ne ≒ Nm for a prescribed amount of time
Mode 2305
tNe ≒ Nm for a prescribed amount of time
Mode 2306
dNc2 ≒ 0 for a prescribed amount of time
Mode 2307
Prescribed amount of time has elapsed
HEV mode

FIG. 12

EV to HEV mode switch request due to operation of the accelerator pedal
Second clutch slip begins
First clutch is engaged
First clutch engagement is determined
Second clutch slip = 0
Second clutch re-engagement completed
Accelerator pedal opening (APO)
0
Time
Nm
Engine rotation speed (Ne)
Motor/generator rotation speed (Nm)
Transmission input rotation speed (Ni)
Ni
Ne
Target engine torque (tTe)
Target motor/generator torque (tTm)
tTm
tTe
ΔTm
Second clutch maximum transfer torque capacity in EV mode (evTmax)
tTc1
First clutch and second clutch target transfer torque capacity (tTc1, tTc2)
tTc2
Drive force that can be achieved in EV mode
tFo0 (Attainable target drive force)
Fo (Actual drive force)
Drive force
t1 t2 t3 t4 t5 t6 t7
EV 2301b 2303 2304 2305 2306 2307 HEV

FIG. 13

EV to HEV mode switch request accompanying a decrease in the SOC or a rise in the vehicle speed
A prescribed amount of time has elapsed since the slip of the second clutch started
First clutch is engaged
First clutch engagement is determined
Second clutch slip = 0
Second clutch re-engagement completed
Accelerator pedal opening (APO)
0
Time
Nm
Engine rotation speed (Ne)
Motor/generator rotation speed (Nm)
Transmission input rotation speed (Ni)
Ne
Ni
Target engine torque (tTe)
tTm
tTe
Target motor/generator torque (tTm)
ΔTm
Second clutch maximum transfer torque capacity in EV mode (evTmax)
tTc1
tTc2
First clutch and second clutch target transfer torque capacity (tTc1, tTc2)
Drive force that can be achieved in EV mode
Fo (Actual drive force)
Drive force
t1 t2' t2 t3 t4 t5 t6 t7
EV 2301a 2302a 2303 2304 2305 2306 2307 HEV

FIG. 14

Calculation of the target second clutch transfer torque capacity for EV mode
START
S71
Second clutch rotational difference Nm-Ni<slip determining rotation speed
No (The slipped state of the second clutch)
Yes (The engaged state of the second clutch)
S72
Did the second clutch slip the previous time?
No (Engaged→Engaged)
Yes (Slipped →Engaged)
S73
Did the second clutch slip the previous time?
No (Engaged→ Slipped)
Yes (Slipped→ Slipped)
S74
The basic value of the correction amount = the correction amount for the previous time divided by 2
S75
The transfer torque capacity correction amount ΔtTc2 = the correction amount for the previous time - the basic value for the correction amount.
S76
tTc2 = the transfer torque capacity corresponding to the drive force + ΔtTc2
END
S77
Did the second clutch slip the time before the previous time?
Yes (Slipped→ Engaged → Engaged)
No (Engaged→ Engaged → Engaged)
S78
The basic value of the correction amount = the correction amount for the previous time x 2
S79
The basic value of the correction amount = the correction amount for the previous time x 2
S80
The transfer torque capacity correction amount ΔtTc2 = the correction amount for the previous time + the basic value for the correction amount.

FIG. 15

Calculation of the target motor/generator torque START
Does the target mode = HEV mode?
S81
No (The target mode=EV mode)
Yes (Go to step S82)
Does the current mode = HEV mode?
S82
No (EV→HEV)
Yes (HEV→HEV)
The target motor/generator torque tTm for HEV mode is calculated
The target motor/generator torque tTm for the engine start control is calculated
S85
Does the current mode = HEV mode?
S83
Yes (HEV→EV)
No (EV→EV)
The target motor/generator torque tTm for when transitioning to EV mode is calculated
S86
The target motor/generator torque tTm for EV mode is calculated
S87
END

FIG. 16

The target motor/generator torque for HEV mode is calculated
START
Is the slip rotation ΔNc of the second clutch≧ΔNc1?
S91
Yes (μ stable area)
No (μ unstable area)
The target motor/generator torque tTm = the drive force tFo portion + the first clutch transfer torque portion
S92
tTm = drive force tFo portion + the first clutch transfer torque portion + the torque for the second clutch slip control portion
S93
END

FIG. 17

The target motor/generator torque for the engine start control is calculated
START
S101
Is the slip rotation ΔNc of the second clutch≧ΔNc1?
Yes (μ stable area)
No (μ unstable area)
S102
The target motor/generator torque tTm = the drive force tFo portion + the first clutch transfer torque portion
S103
Is the engine rotation Ne > the rotation speed for completion of the start-up?
Yes (Start-up has been completed)
No (It is before completion of the start-up)
S105
tTm = drive force tFo portion + the first clutch transfer torque portion + the torque for the second clutch slip control portion
S104
tTm = drive force tFo portion + first clutch transfer torque portion + the torque for the second clutch slip control portion - the estimated value of the engine torque
END

FIG. 18

The target motor/generator torque for EV mode is calculated
START
The target motor/generator torque tTm = the drive force tFo portion
S111
END

FIG. 19

# FIG. 20

(a)
EV mode
Rotation speed (rpm)
Motor
Second clutch
Transmission input axis
First clutch
Engine
(b)
First stage
Rotation speed (rpm)
Motor
Second clutch
Transmission input axis
First clutch
Engine
(c)
Second stage
Rotation speed (rpm)
Motor
Second clutch
Transmission input axis
First clutch
Engine
(d)
Third stage
Rotation speed (rpm)
Engine
First clutch
Second clutch
Motor
Transmission input axis
(e)
HEV mode
Rotation speed (rpm)
First clutch
Second clutch
Transmission input axis
Engine
Motor

(μ unstable area)
(μ stable area)
Friction coefficient (μ)
0
0
Δ Nc1
Second clutch slip amount ΔNc =Nm-Ni

FIG. 21

Accelerator pedal opening (APO)
0
Vehicle speed (VSP)
0
Attainable target drive force (tFo0)
Transitional target drive force (tFo)
0
Drive force that can be achieved in EV mode
tFo0
tFo
t1 t2 t3
EV mode request flag
EV mode request
HEV mode request
Torque capacity for complete engagement (Tc2max)
Target second clutch transfer torque capacity (tTc2)
Second clutch transfer torque (Tc2)
0
The torque capacity corresponding to the tFo for EV mode
tTc2
Tc2
Target first clutch transfer torque capacity (tTc1)
First clutch transfer torque (Tc1)
0
tTc1
Tc1
ΔNc (Slip rotation of the second clutch)
Engine rotation speed (Ne)
Motor/generator rotation speed (Nm)
Transmission input rotation speed (Ni)
0
Nm
Ni
Ne
Target motor/generator torque (tTm)
Engine torque (Te)
0
tTm
Tc
Request for increase in the drive force (EV → HEV)
(ΔNc≧ΔNc1) (Unstable area for the friction coefficient → Stable area for the friction coefficient)
Second clutch begins to slip
Cranking of the engine begins


FIG. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H11082260 A
- JP 2005260631 A
- JP 2005260888 A

### Non-patent literature cited in the description

- New Skyline Model (CV35. Nissan Motor Co., Ltd, January 2003